# EUROPEAN PATENT SPECIFICATION

(11) **EP 4 554 765 B1**
(45) Date of publication and mention of the grant of the patent: **21.10.2026**
(21) Application number: 23752081.2
(22) Date of filing: 13.07.2023
(51) Int. Cl.: B27L 11/08, B33Y 80/00, B27L 1/08, B22F 7/06, B22F 7/08, B22F 10/25, C22C 29/06, C22C 29/08, B33Y 10/00

(54) **SELF-SHARPENING KNIFE TIP**
SELBSTSCHÄRFENDE MESSERSPITZE
POINTE DE COUTEAU À AFFUTÂGE AUTOMATIQUE

(30) Priority: 15.07.2022 US 202263389794 P
(43) Date of publication of application: 21.05.2025
(73) Proprietor: Nicholson Manufacturing Ltd., Sidney, BC V8L 1T2 (CA)
(72) Inventor: PAGEL, Eric Grant, Saanichton, British Columbia V8M 1Y8 (CA); LEFSRUD, Jorgen Carl, Salt Spring Island, British Columbia V8K 1W1 (CA); BOWDEN, James Buckley, Victoria, British Columbia V8N 1E8 (CA)
(74) Representative: Eisenführ Speiser
(86) International application number: PCT/US2023/027654
(87) International publication number: WO 2024/015523

(56) References cited:
- WO-A1-03/018239
- DE-T2- 69 717 552
- US-A- 5 472 027
- US-A1- 2020 283 876
- US-B2- 7 743 805
- US-B2- 9 068 260

## Description

### BACKGROUND

### Technical Field

The present disclosure is directed to self-sharpening debarker knife tips, which may be utilized for debarking logs.

### Description of the Related Art

Generally, a debarker knife tip is structured and configured to remove bark from a log during a log processing method. For example, a wear material of the debarker knife tip includes a sharp edge or cutting edge that removes (e.g., cuts or scrapes away) the bark from the log as the log passes through a debarker apparatus or system to expose wood within the log that was previously covered by the bark. Over time, the sharp edge of the wear material erodes as the debarker knife tip is utilized over and over again to remove bark from a number of logs. This erosion eventually leads to the wear material of the debarker knife tip no longer being usable such that the debarker knife tip with the wear material needs to be sharpened or replaced with a new debarker knife tip with a fresh sharp edge such that bark may be effectively removed from logs as the logs pass through the debarker apparatus or system. This erosion of the wear material may include snapping or breaking away of portions of the wear material or the debarker knife tip, cracking of portions of the wear material or the debarker knife tip, or other similar or like types of failure that may be a result of erosion from continuous use of the debarker knife tip, which includes the wear material. US 9 068 260 B discloses the preamble of claim 1.

### BRIEF SUMMARY

The invention is set out in the appended set of claims and is as defined in claim 1.

### BRIEF DESCRIPTION OF THE SEVERAL VIEWS OF THE DRAWINGS

For a better understanding of the embodiments, reference will now be made by way of example to the accompanying drawings. In the drawings, identical reference numbers identify the same or similar elements or acts unless the context indicates otherwise. The sizes and relative proportions of the elements in the drawings are not necessarily drawn to scale. For example, some of these elements may be enlarged and positioned to improve drawing legibility.
Figure 1A is a perspective view of an example of a debarker knife tip.
Figure 1B is perspective view of the example of the debarker knife tip as shown in Figure 1A after the debarker knife tip has reached an end of the debarker knife tip's usable lifespan.
Figure 1C is a side view of the example of the debarker knife tip as shown in Figure 1A after the debarker knife tip has reached an end of the debarker knife tip's usable lifespan.
Figure 2A is a perspective view of an embodiment of a debarker knife tip of the present disclosure.
Figure 2B is a right side view of the embodiment of the debarker knife tip as shown in Figure 2A.
Figure 2C a left side view of the embodiment of the debarker knife tip as shown in Figure 2A.
Figure 2D is a perspective view of the embodiment of the debarker knife tip as shown in Figure 2A with one or more layers of material not present.
Figure 2E is a side view of an alternative embodiment of the debarker knife tip as shown in Figures 2A-2C.
Figure 3A is a perspective view of an embodiment of a debarker knife tip of the present disclosure.
Figure 3B is a front side view of the embodiment of the debarker knife tip as shown in Figure 3A.
Figure 3C is a perspective view of the embodiment of the debarker knife tip as shown in Figure 3A with one or more layers of material not present.
Figure 4A is a perspective view of an embodiment of a debarker knife tip of the present disclosure.
Figure 4B is a front side view of the embodiment of the debarker knife tip as shown in Figure 4A.
Figure 4C is a rear side view of the embodiment of the debarker knife tip as shown in Figure 4A.
Figure 4D is a right side view of the embodiment of the debarker knife tip as shown in Figure 4A.
Figure 4E is a left side view of the embodiment of the debarker knife tip as shown in Figure 4A.
Figure 4F is a perspective view of the embodiment of the debarker knife tip as shown in Figure 4A with one or more layers of material not present.
Figure 5 is a flowchart directed to a method of utilization of at least one embodiment of a debarker knife tip of the present disclosure.
Figure 6A is a top plan view of the embodiment of the debarker knife tip as shown in Figures 2A-2D of the present disclosure after being utilized within a debarker.
Figure 6B is a top plan view of the embodiment of the debarker knife tip as shown in Figures 2A-2D of the present disclosure after being utilized within a debarker.
Figure 6C is a top plan view of the embodiment of the debarker knife tip as shown in Figures 2A-2D of the present disclosure after being utilized within a debarker.
Figure 7 is a top plan view of an embodiment of a debarker knife tip of the present disclosure.
Figure 8A is a side view of an embodiment of a debarker knife tip of the present disclosure.
Figure 8B is a zoomed in, side view of an alternative embodiment of the debarker knife tip as shown in Figure 8A of the present disclosure.
Figure 8C is a zoomed in, side view of an alternative embodiment of the debarker knife tip as shown in Figure 8A of the present disclosure.
Figure 9 is a flowchart of a method of manufacturing of at least one embodiment of the debarker knife tips of the present disclosure.
Figure 10 is a flowchart of a method of manufacturing of at least one embodiment of the debarker knife tips of the present disclosure.
Figure 11 are perspective views of alternative embodiments of debarker knife tips of the present disclosure.
Figure 12 is a perspective view of an alternative embodiment of a debarker knife tip of the present disclosure.
Figure 13 is a front view of one or more debarker knife tips of the present disclosure installed in a debarker.

### DETAILED DESCRIPTION

In the following description, certain specific details are set forth in order to provide a thorough understanding of various embodiments of the disclosure. However, one skilled in the art will understand that the disclosure may be practiced without these specific details. In other instances, well-known structures associated with debarkers and debarker knife tips have not been described in detail to avoid unnecessarily obscuring the descriptions of the embodiments of the present disclosure.

Unless the context requires otherwise, throughout the specification and claims that follow, the word "comprise" and variations thereof, such as "comprises" and "comprising," are to be construed in an open, inclusive sense, that is, as "including, but not limited to."

The use of ordinals such as first, second, third, etc., does not necessarily imply a ranked sense of order, but rather may only distinguish between multiple instances of an act or a similar structure or material.

Reference throughout this specification to "one embodiment" or "an embodiment" means that a particular feature, structure, or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

The terms "left," "right," "top," "bottom," "upper," or "lower" are used for only discussion purposes based on the orientation of the components in the discussion of the Figures in the present disclosure as follows. These terms are not limiting as to the possible positions explicitly disclosed, implicitly disclosed, or inherently disclosed in the present disclosure.

As used in this specification and the appended claims, the singular forms "a," "an," and "the" include plural referents unless the content clearly dictates otherwise.

While various embodiments are shown and described with respect to debarker knife tips, it will be readily appreciated that embodiments of the present disclosure are not limited thereto. In various embodiments, the structures, devices, methods and the like described herein may be embodied in or otherwise utilized in any suitable type or form of a debarker knife tip.

Generally, debarker knife tips include wear materials that are made of a relatively hard single, continuous piece of material. For example, the wear materials of the debarker knife tips may be a hard carbide material that is hard enough to cut away or remove bark from logs as the logs pass through a debarker in which the debarker knife tips are utilized. Over time, cutting edges of the wear materials and the wear material itself of the debarker knife tips erode and become dull. For example, in at least some instances, portions of the wear materials may break away (e.g., shear away due to crack propagation in the knife tips) resulting in the wear materials of the debarker knife tips no longer being capable of sufficiently removing bark from the logs as the logs pass through the debarker. As the wear materials are made of the single, continuous piece of material, the portions of the wear materials that break away are unpredictable such that removal of bark from logs overtime is less consistent over the usable lifespan of the debarker knife tips with the wear materials that are made of the single, continuous piece of material. Once the wear materials reach the end of their usable lifespan due to this erosion or deterioration from use, the debarker knife tips may be discarded and new debarker knife tips are installed into the debarker. Alternatively, the wear materials with the cutting edges of the debarker knife tips may be sharpened, or the eroded wear materials on base components of the debarker knife tips may be removed such that new wear materials may be formed on the base components of the debarker knife tips to form new, sharp cutting edges *(e.g.,* the base components of the debarker knife tips may be reutilized)

The present disclosure is directed to at least some embodiments of debarker knife tips that may be utilized in a debarker to remove bark from logs that pass through the debarker. The debarker knife tips may include self-sharpening cutting edges as a result of an additive, self-sharpening wear material (e.g., a 3D printable wear material or a 3D printable cutting material) that is utilized to form one or more layers of the self-sharpening wear material. In some embodiments of the present disclosure, the self-sharpening cutting edge may include one or more layers of the self-sharpening wear material that are stacked on each other. When utilizing the self-sharpening wear material of the debarker knife tip, the self-sharpening wear material deteriorates, degrades, and erodes in a predictable and expected fashion such that a portion of the self-sharpening wear material at a first cutting edge breaks away exposing a second cutting edge as the debarker knife tips with the self-sharpening wear material are utilized to remove bark from logs. This self-sharpening nature of the self-sharpening wear material of the debarker knife tips of the present disclosure may allow for the self-sharpening debarker knife tips to be more consistent in the removal of bark from logs over a usable lifespan of the self-sharpening debarker knife tips relative to the debarker knife tips including the single, continuous piece of wear material as discussed above. In other words, the self-sharpening debarker knife tips may be utilized to remove bark from logs that pass through a debarker in a consistent and expected fashion for a longer period of time due to the self-sharpening nature of the wear material of the self-sharpening debarker knife tips.

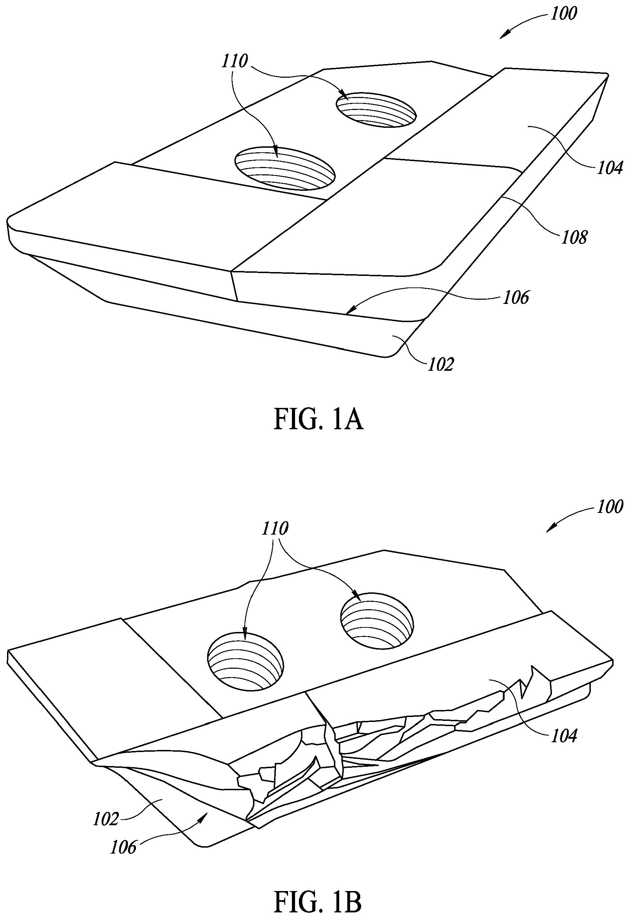

Figure 1A is a perspective view of an example of a debarker knife tip 100 including a base component 102 and a wear material 104 on the base component 102. The wear material 104 is on a surface 106 of the base component 102, and the wear material 104 may be coupled to the base component 102 by a soldered connection at the surface 106 of the base component 102. In other words, the soldered connection adheres the wear material 104 to the base component 102. As shown in Figure 1A, the wear material 104 is made of a single, continuous piece of material. For example, the wear material 104 may be made of a carbide-based material or a metal-carbide matrix material, for example, a tungsten carbide material. The wear material 104 includes a cutting edge 108 that is sharp enough to remove bark from logs as the logs pass through a debarker in which the debarker knife tip 100 is installed.

The debarker knife tip 100 includes one or more openings 110. The one or more openings 110 may extend through the base component 102 and may be threaded such that the debarker knife tip 100 may be installed within a debarker utilizing threaded fasteners.

Figure 1B is a perspective view of the example of the debarker knife tip 100 after being utilized within a debarker to remove bark from logs as the logs pass through the debarker. As may be readily seen in Figure 1B, large portions of the wear material 104 have broken away (e.g., sheared away or snapped away). For example, this failure as shown in Figure 1B may be a result of crack propagation that occurs within the knife tip 104 until the cracks become large enough within the wear material 104 such that the large portions of the wear material 104 break away resulting in the cutting edge 108 no longer being sufficient to remove bark from the logs. Once the large portions of the wear material 104 break away at a location at which the cutting edge 108 was previously present, the wear material 104 is no longer usable and must be replaced with a new wear material 104 or a new debarker knife tip 100. This type of failure generally occurs all at once such that the failure is catastrophic and there is no warning of this type of failure, which may result in less effective debarking of logs passing through the debarker.

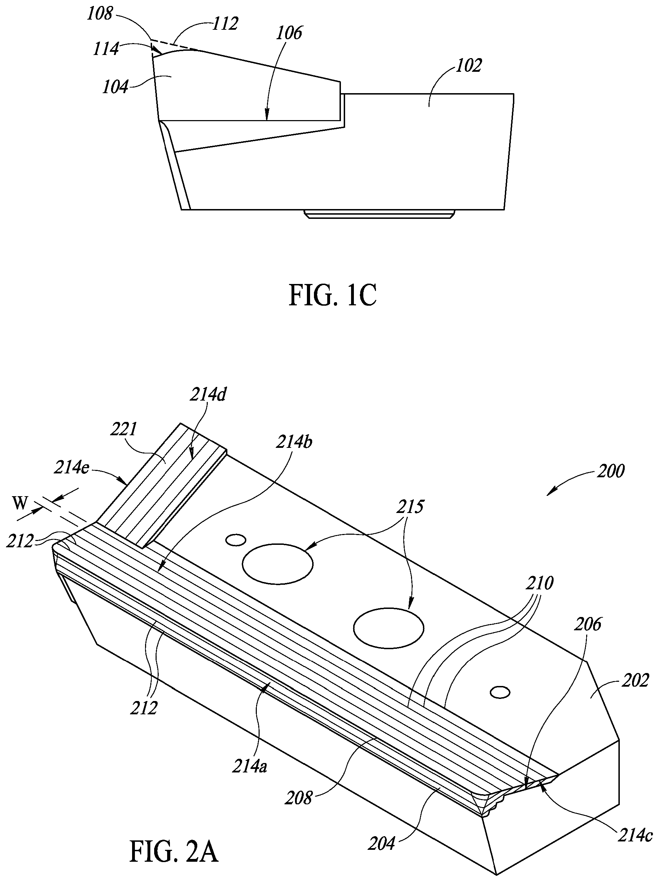

Figure 1C is a side view of the example of the debarker knife tip 100 after being utilized within a debarker to remove bark from logs as the logs pass through the debarker. As may be readily seen in Figure 1C, a dotted line 112 is representative of the cutting edge 108 when the wear material 104 of the debarker knife tip 100 was sharp and new. However, after the wear material 104 of the debarker knife tip 100 is utilized within the debarker to remove bark from the logs, the wear material 104 erodes and degrades over time until enough material of the wear material 104 has been removed resulting in a rounded or curved end 114 being present previously where the cutting edge 108 was present. Once the wear material 104 has eroded or degraded such that the wear material 104 can no longer effectively and sufficiently remove bark from the logs, the debarker knife tip 100 may be removed from the debarker and replaced with a new, sharp debarker knife tip 100. Alternatively, the debarker knife tip 100 may be removed from the debarker and the wear material 104 may be sharpened, or the worn and eroded wear material 104 may be removed from the base component 102 and replaced with a new single, continuous piece of the wear material 104 with a new, sharp cutting edge 108. This type of erosion and degradation happens over time until the wear material 104 of the debarker knife 100 has reached the end of its usable lifespan at which point the debarker knife tip 100 is replaced by a new, sharp debarker knife tip 100, is re-sharpened, or has the worn and eroded wear material 104 replaced with a new, single, continuous piece of wear material 104 with a new, sharp cutting edge 108.

The wear material 104 as shown in Figures 1A-1C, which can either reach the end of its usable lifespan through a catastrophic failure as shown in Figure or reach the end of its usable lifespan through erosion and degradation through normal wear and tear, generally has a usable lifespan shorter than the usable lifespan of "self- sharpening" debarker knife tips of the present disclosure as discussed in further detail herein. For example, the "self-sharpening" debarker knife tips of the present disclosure may be able to have more "self-sharpening" wear material worn away while remaining sharp to continually remove bark from logs that pass through the debarker. This "self-sharpening" effect increases the time between maintenance (e.g., re-sharpening or rebuilding of the "self-sharpening" wear material) on the "self-sharpening" debarker knife tips of the present disclosure or replacement of the "self-sharpening" debarker knife tips of the present disclosure.

Figure 2A is directed to a perspective view of an embodiment of a debarker knife tip 200 of the present disclosure. As shown in Figure 2A, the debarker knife tip 200 includes a base component 202 and a wear material 204. The wear material 204 is on a surface 206 of the base component 202, and the wear material 204 includes a cutting edge 208. Unlike the wear material 104 of the debarker knife tip 100 as shown in Figure 1A, the wear material 204 as shown in Figure 2A includes a plurality of layers 210. In some embodiments, each respective layer of the plurality of layers 210 may be made of a first material. In some embodiments, first respective ones of the plurality of layers 210 may be made of a first material and second respective ones of the plurality layers 210 may be made of a second material different from the first material. When the plurality of layers 210 includes the first respective layers of the first material and second respective layers of the second material, the first and second respective layers may be staggered such that each one of the first respective layers is only abutting one or more of the second respective layers and vice versa. When the plurality of layers includes the first respective layers of the first material and the second respective layers of the second material, the first material may be harder than the second material such that the first material may be more readily capable of removing bark from the logs whereas the second material may be more deformable and softer to reduce the likelihood of complete catastrophic failure as shown in Figure 1B. The second material being softer than the first material may allow the first and second respective layers to erode away in a predictable fashion such that after the cutting edge 208 of one of the first respective layers of the first material is deteriorated a new cutting edge becomes exposed. The new cutting edge may be an edge of the next one of the first respective layers as the second respective layer abutting the previous first respective layer with the cutting edge 208 may deteriorate and be removed quickly to expose the new cutting edge of the next one of the first respective layers to expose the new cutting edge of the next one of the first respective layers. Controlling the deterioration of the wear material 204 by staggering one or more layers of different materials as discussed above may allow for the wear material 204 to deteriorate in the predictable fashion as discussed above such that the debarker knife tip 200 with the wear material 204 removes bark from logs passing through a debarker in more consistently for a longer period of time relative to the debarker knife tip 100 that includes a single, continuous piece of the wear material 104.

The first and second materials of the plurality of layers 210 of the wear material 204 may be additive cutting materials (e.g., 3D printable cutting materials or 3D printable wear materials) that may be compatible with an additive manufacturing process such as a 3D printing process to form the wear material 204 on the base component 202. For example, the first material may be a first carbide-based material that is relatively hard as compared to the second material, which may be a second carbide-based material that is softer than the first carbide-based material.

The wear material 204 includes the plurality of micro-ridges 212. The respective micro-ridges of the plurality of micro-ridges are present adjacent to the respective layers of the plurality of layers 210. The plurality of micro-ridges 210 separate the respective ones of the plurality of layers 210 from each other, respectively. The micro-ridges 212 may be referred to as micro-lines, micro-lines, or some other type of reference to the micro-ridges 212. The micro-ridges 212 may act as stress concentrators along which the wear material 204 may fail such that respective portions at the cutting edge 208 of the wear material 204 break away or shear away in a predictable fashion. These respective portions of the cutting edge 208 breaking away, shearing away, eroding away, wearing away, or deteriorating away over time may result in the cutting edge 208 being removed from the wear material 204 gradually, resulting in a self-sharpening effect by exposing a new cutting edge of the wear material 204. In other words, as the wear material 204 is utilized within a debarker to remove bark from logs passing through the debarker, the respective portions of the wear material 204 breaking away, shearing, eroding away, wearing away, or deteriorating away may result in the cutting edge being removed, exposing or forming a new cutting edge of the wear material 204, which may be referred to as the self-sharpening effect. In view of the above discussion, the plurality of micro-ridges 212 may be positioned and formed due to the utilization of an additive manufacturing technique (e.g., 3D printing manufacturing technique) or some other manufacturing technique that allows for the formation of the wear material 204 with an additive cutting material (e.g., 3D printing compatible cutting material). Ones of the plurality of micro-ridges 212 may be present within the additive cutting material of the wear material 204 when multiple layers of the additive cutting material are utilized to form the wear material 204. For example, while discharging the additive cutting material to form either one or multiple layers of the additive cutting material onto the base component 202 to form the wear material 204 of the debarker knife tip 200, the plurality of micro-ridges 212 is formed as the additive cutting material is printed onto the base component 202. While this self-sharpening effect is discussed with respect to the embodiment of the wear material 204 of the debarker knife tip 200 as shown in Figures 2A-2D, it will be readily appreciated that this self-sharpening effect readily applies to the wear material of the other embodiments of debarker knife tips of the present disclosure as well as other embodiments of debarker within the scope of the present disclosure.

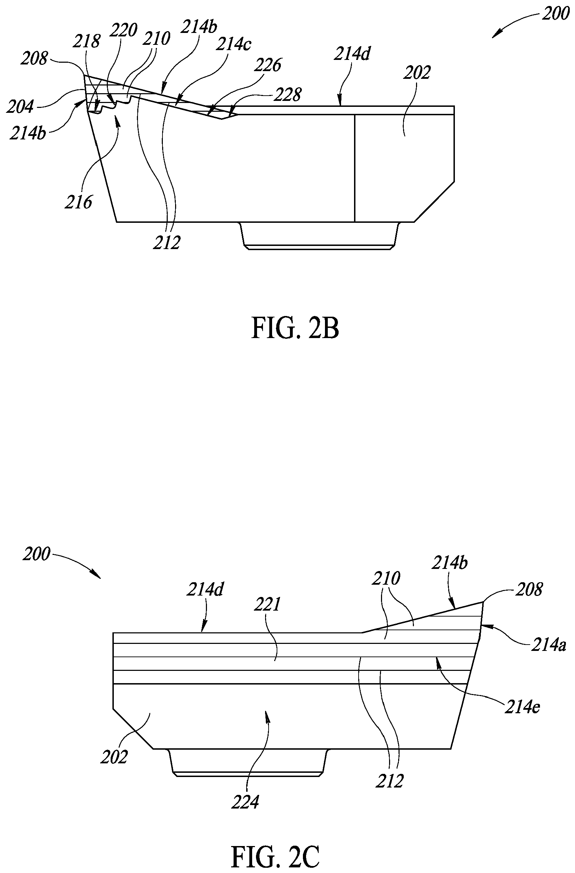

The plurality of micro-ridges 212 may be present on various respective surfaces 214a, 214b, 214c, 214d, 214e. These respective surfaces 214a, 214b, 214c, 214d, 214e may be exposed surfaces of the additive material of the wear material 204. These respective surfaces 214a, 214b, 214c, 214d, 214e may be referred to as surfaces of the wear material 204, or may be referred to as wear surfaces and sidewalls, respectively. A first surface 214a is a first angled surface that extends from the base component 202 to the cutting edge 208 of the wear material 204 at which the first surface 214a meets a second surface 214b, which is an angled surface as well. A third surface 214c is transverse to the first surface 214a and the second surface 214b, for example, the third surface 214c may be a sidewall surface that extends from the base component 202 to the second surface 214b. A fourth surface 214d may be a flat surface that is between the second surface 214b and an end of the base component 202 that is opposite to the cutting edge 208 of the wear material 204. A fifth surface 214e (see Figure 2C) is transverse to the first, second, and fourth surfaces 214a, 214b, 214d, respectively, for example, the fifth surface 214e may be a sidewall surface.

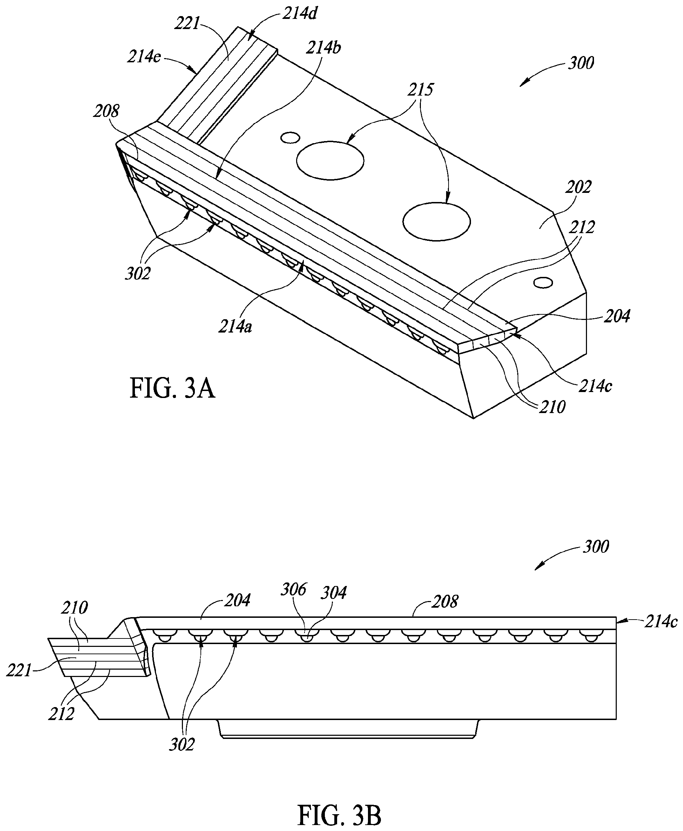

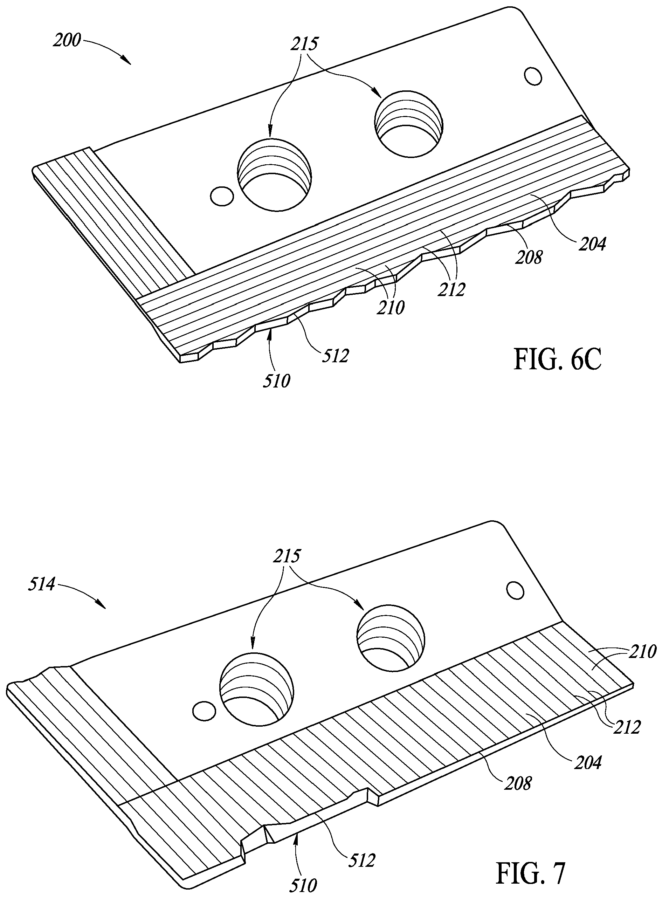

In the embodiment of the debarker knife tip 200 as shown in Figure 2A, the plurality of micro-ridges 212 along the first surface 214a and the second surface 214b are substantially parallel with the cutting edge 208 of the wear material 204. For example, this orientation of the plurality of micro-ridges 212 may further facilitate the self-sharpening effect as discussed herein. For example, as the cutting edge 208 removes bark from logs that pass through a debarker in which the debarker knife tip 200 is installed, a crack may predictably propagate along the respective micro-ridge of the plurality of micro-ridges 212 closer to the cutting edge 208 such that, if a portion between the cutting edge 208 and the respective micro-ridge closer to the cutting edge 208 breaks or shears away from the wear material 204, a new cutting edge is formed. This self-sharpening effect by the formation of new cutting edges as the wear material 204 is in use may extend the usable lifespan of the debarker knife tip 200, increase the period of time before the debarker knife tip 200 reaches the end of its usable lifespan, and increase the consistency of which the debarker knife tip 200 is capable of removing bark from the logs over the usable lifespan of the debarker knife tip 200. In the embodiment as shown in Figure 2A, the plurality of micro-ridges 212 along the first surface 214a and the second surface 214b are substantially parallel to the cutting edge 208. In some alternative embodiments, the plurality of micro-ridges 212 may be transverse to the cutting edge 208 (e.g., see Figure 7 of the present disclosure). Orienting the plurality of micro-ridges 212 in different fashions relative to the cutting edge 208 may facilitate different types of breaking away, shearing away, eroding away, wearing away, or deteriorating away of portions of the wear material 204 such that different self-sharpening effects may be facilitated and selected for specific types of debarker knives that may have different applications (e.g., removing bark from different types of logs harvested from different types of trees). For example, the plurality of micro-ridges 212 may be oriented transverse to the cutting edge 208 when the debarker knife tip 200 is to remove bark from a first species of wood, and, alternatively, the plurality of micro-ridges 212 may be oriented parallel to the cutting edge 208 when the debarker knife tip 200 is to remove bark from a second species of wood. In other words, the orientation of the plurality of micro-ridges 212 may be selected and determined to optimize the self-sharpening effect of the debarker knife tip 200 when in use to increase the usable lifespan of the wear material 204 of the debarker knife tip 200. In other words, the orientation of the plurality of micro-ridges 212 may be formed to be in any orientation as desired to facilitate or increase the lifespan of the wear material 204 through the "self-sharpening" effect as discussed herein. While the orientation of the plurality of micro-ridges 212 is discussed with respect to the embodiment of the wear material 204 of the debarker knife tip 200 as shown in Figures 2A-2D, it will be readily appreciated that the orientation of the plurality of micro-ridges 212 readily applies to the knife tips 204 of the other embodiments of debarker knives 300, 400, 600 as shown in Figures 3A-4D and 7 of the present disclosure, as well as other embodiments of debarker knives within the scope of the present disclosure.

The base component 202 of the debarker knife tip 200 includes one or more openings 215. The one or more openings 215 are the same or similar to the one or more openings 110 as discussed above with respect to the debarker knife tip 100 as shown in Figures 1A-1B. For example, the one or more openings 215 may be threaded such that threaded fasteners (e.g., bolts, screws and washers, or some other suitable type of fastener) may be utilized to securely mount the debarker knife tip 200 within a debarker for utilization in removing bark from logs that are passed through the debarker in which the debarker knife tip 200 is installed. In some alternative embodiments, the one or more openings may not be threaded but different types of fasteners *(e.g.,* nuts and bolts) may be utilized to securely mount the debarker knife tip 200 within a debarker for utilization in removing bark from logs that are passed through the debarker in which the debarker knife tip 200 is installed. In view of the above discussion, any type of suitable fastener or mounted structure, components, or technique may be utilized to mount or install the debarker knife tip 200 within a debarker for utilization in removing bark from logs that are passed through the debarker. In some embodiments, there may be only one opening instead of the two openings 215 as shown in Figure 2A. In other words, any number of the one or more openings 215 may be present such that any suitable type of fastener may be utilized for mounting various embodiments of the debarker knife tip 200 within a debarker. In some embodiments, the debarker knife tip 215 may not have the one or more openings and, instead, may be mounted into a debarker in some other suitable fashion known within the debarker industry.

In an alternative embodiment of the debarker knife tip 200, the staircase-like structure 216 of the base component 202 may not be present and the plurality of layers 210 may be replaced by a single layer of the wear material 204. The single layer of the wear material 204 on the base component 202 may include a plurality of micro-ridges 212.

Figure 2B is directed to a right side view of the debarker knife tip 200 as shown in Figure 2A. As shown in Figure 2B, the base component 202 includes a staircase-like structure 216 on which the wear material 204 is present. The staircase-like structure 216 may include one or more tread surfaces 218 and one or more riser surfaces 220. The staircase-like structure 216 may be present such that an amount of the additive material present adjacent to the cutting edge 208 of the wear material 204 is increased to increase the usable lifespan of the 204 of the debarker knife tip 200. For example, as there is more of the additive material of the wear material 204 present adjacent to the cutting edge 208, a period of time it takes for the knife tip 204 to fully deteriorate or erode to a time which warrants replacing the debarker knife tip 200 may be increased. The staircase-like structure 216 may result in the additive material of the knife tip 204 being more robustly adhered to the base component 202 reducing the likelihood of a catastrophic failure of the wear material 204 similar to the catastrophic failure of the knife tip 104 as shown in Figure 1B of the present disclosure. For example, the additive material of the wear material 204 may be more robustly adhered to the base component 202 when the staircase-like structure 216 is present as an adhesion surface area between the additive material of the wear material 204, and the base component 202 near the cutting edge 208 is increased relative to when the staircase-like structure 216 is not present. In some embodiments, the additive material of the wear material 204 may be formed on the staircase-like structure 216 utilizing a 3D additive material printing process or some other process or technique that allows for the wear material 204 on the staircase-like structure 216.

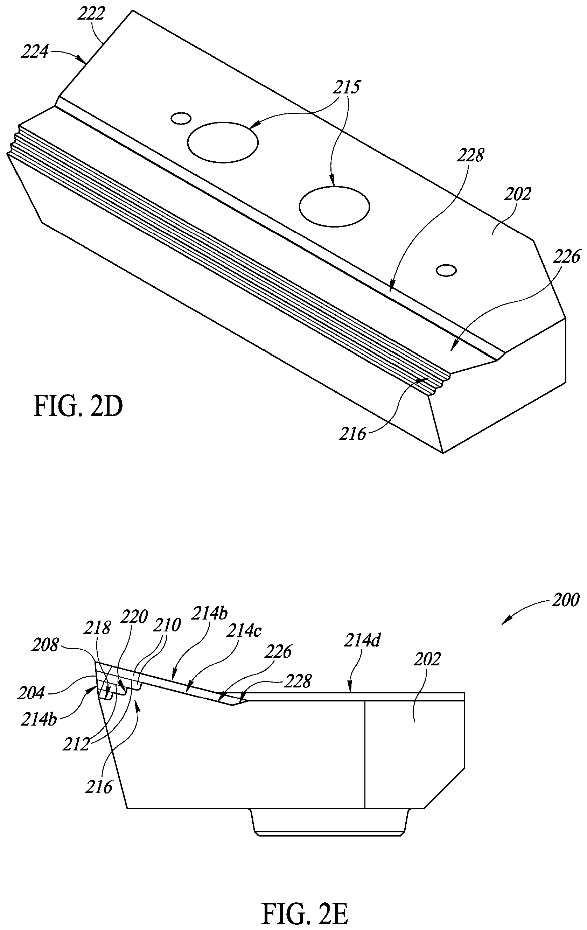

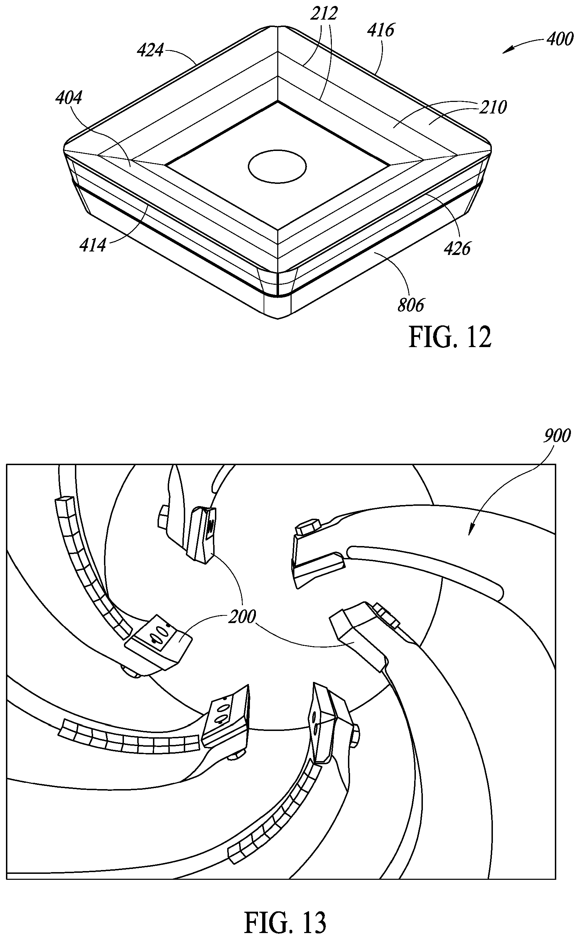

Figure 2C is directed to a left-side view of the debarker knife tip 200 as shown in Figures 2A and 2B, respectively. As shown in Figure 2C, the wear material 204 includes a portion 221 of the wear material 204 that wraps around an edge 222 (see Figure 2D) of the base component 202 of the debarker knife tip 200 and is on a sidewall 224 of the debarker knife tip 200. The portion 221 may be referred to as a wraparound portion. The portion 221 of the wear material 204 wrapping around the edge 222 and being present on the sidewall 224 of the base component 202 may be a leading edge or lead portion of the debarker knife tip 200 that initially comes into contact with one or more logs when passing through a debarker (for example, see Figure 13 of the present disclosure) to be debarked. The portion 221 of the wear material 204 wrapping around the edge 222 and being present on the sidewall 224 of the base component 202 provides wear resistance to the leading edge of the debarker knife tip 200 to improve the usable life span of the debarker knife tip 200.

Figure 2D is a perspective view of the base component 202 without the wear material 204 present on the base component 202. As shown in Figure 2D, the base component 202 includes a first surface 226 that extends from the staircase-like structure 216 to a second surface 228 that is transverse to the first angled surface 226. The first and second surfaces 226, 228 of the base component 202 of the debarker knife tip 200 may be angled surfaces. As shown in Figures 2A-2C, the additive cutting material of the wear material 204 is formed on the first and second surfaces 226, 228 of the base component 202, respectively.

Figure 2E is a side view of an alternative embodiment of the debarker knife tip 200 as shown in Figures 2A-2C of the present disclosure. In this alternative embodiment of the debarker knife tip 200, the plurality of layers 210 includes four layers. Each one of the four layers of the plurality of layers 210 is separated from an adjacent one of the four layers by one of the plurality of micro-ridges 212, respectively. Each one of the plurality of layers 210 corresponds to one of the four steps of the staircase-like structure 216, respectively. While in this alternative embodiment the plurality of layers 210 includes four layers, it will be readily appreciated that a number of the plurality of layers 210 may be selected such that the plurality of layers 210 includes more than four layers or includes less than four layers. While in this alternative embodiment the staircase-like structure 216 includes four steps, it will be readily appreciated that a number of the steps of the staircase-like structure 216 may be selected such that the staircase-like structure 216 includes more than four steps or includes less than four steps.

Figure 3A is directed to an alternative embodiment of a debarker knife tip 300 of the present disclosure. As shown in Figure 3A, the debarker knife tip 300 includes several of the same or similar features of the debarker knife tip 200 as shown in Figures 2A-2D of the present disclosure. Accordingly, the features of the debarker knife tip 300 as shown in Figures 3A-3C have the same or similar reference numerals as those same or similar features of the debarker knife tip 200 as shown in Figures 2A-2D. For the sake of simplicity or brevity of the present disclosure, the focus of the following discussion will be on different or additional features of the debarker knife tip 300 as shown in Figures 3A-3C relative to the debarker knife tip 200 as shown in Figures 2A-2D, and will be discussed in detail as follows within the present disclosure.

Unlike the embodiment of the debarker knife tip 200 as shown in Figures 2A-2D, the debarker knife tip 300 as shown in Figure 3A includes a plurality of grooves 302 in which the additive cutting material of the wear material 204 is present. The plurality of grooves 302 is provided to increase the surface area of the additive cutting material of the wear material 204 of the base component 202 to more securely and robustly adhere the additive cutting material of the wear material 204 to the base component 202. The plurality of grooves 302 may allow a harder and brittle wear material 204 relative to the base component 202 to be positioned within the plurality of grooves 302 such that the harder and brittle wear material 204 will provide greater wear and abrasion resistance while softer material of the base component 202 will more readily absorb impact energy than the harder and brittle wear material 204. In other words, the harder and brittle wear material 204 will not wear as quickly as the softer material of the base component 202.

Unlike the debarker knife tip 100 as shown in Figures 1A and 1B that includes the knife tip 104 made of the single, continuous piece of material, the wear material 204 as shown in Figure 3A is made of the plurality of layers 210 and is formed utilizing an additive manufacturing technique, for example, a 3D printing process compatible with printing the additive cutting material. Utilizing the additive manufacturing process to form the wear material 204 of the additive cutting material allows for the additive cutting material to be formed in the plurality of grooves 302, which would be difficult and expensive to achieve utilizing a single, continuous pieces of material similar to the knife tip 104 as shown in Figures 1A and 1B due to precision and tooling costs.

Figure 3B is a front side view of the debarker knife tip 300 as shown in Figure 3A. As shown in Figure 3B, each one of the plurality of grooves 302 includes a first portion 304 and a second portion 306 that are in a stacked configuration, for example, the second portion 306 is stacked on the first portion 304 as shown in Figure 3B.

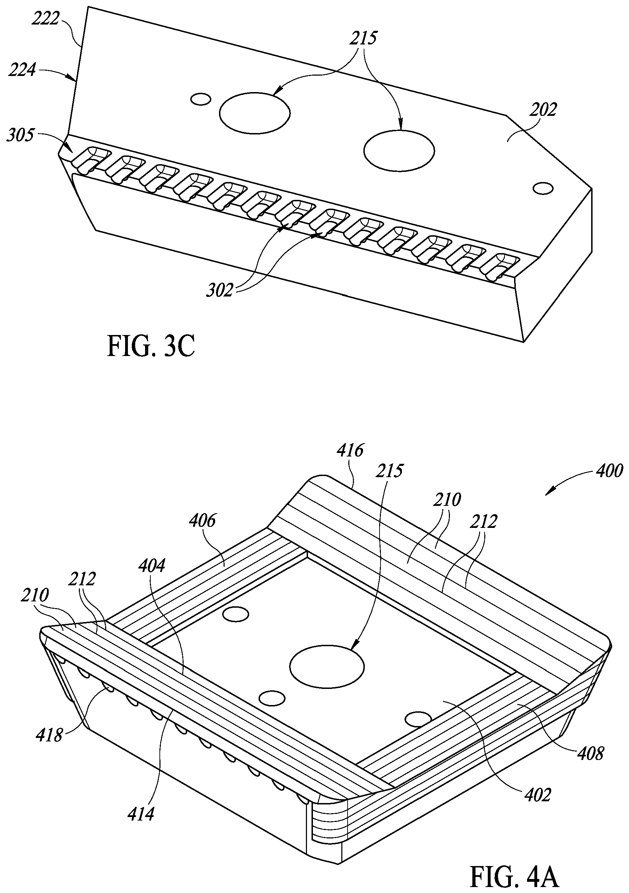

Figure 3C is a perspective view of the base component 202 of the debarker knife tip 300 without the wear material 204 present on the base component 202 of the debarker knife tip 300. As shown in Figure 3C, for example, the first portion 304 may be a first-half cylinder with a first radius and the second portion 306 may be a second half-cylinder stacked on the first portion 304 with a second radius that is greater than the first radius. However, in some alternative embodiments, the plurality of grooves 302 may have some other shape or size such that the surface area between the base component 202 and the additive cutting material is increased to more securely and robustly adhere the additive cutting material of the wear material 204 to the base component 202 as shown in Figures 3A-3C. As shown in Figure 3C, the plurality of grooves 302 is present at a surface 305 of the base component 202 of the debarker knife tip 300. Similar to the first surface 226 of the base component 202 of the debarker knife tip 200, the surface 305 of the base component 202 of the debarker knife tip 300 may be an angled surface.

Figure 4A is a perspective view of an alternative embodiment of a debarker knife tip 400. As shown in Figure 4A, the debarker knife tip 400 includes several of the same or similar features of the debarker knives 200, 300 as shown in Figures 2A-2D and 3A-3C of the present disclosure. Accordingly, the features of the debarker knife tip 400 as shown in Figures 4A-4D have the same or similar reference numerals as those same or similar features of the debarker knives 200, 300 as shown in Figures 2A-2D and 3A-3C. For the sake of simplicity or brevity of the present disclosure, the focus of the following discussion will be on different or additional features of the debarker knife tip 400 as shown in Figures 4A-4D relative to the debarker knives 200, 300 as shown in Figures 2A-2D and 3A-3C, and will be discussed in detail as follows within the present disclosure.

Unlike the base components 202 of the debarker knives 200, 300, which are more parallelepiped-like in shape, as shown in Figures 2A-2D and 3A-3C, the debarker knife tip 400 as shown in Figures 4A-4E includes a base component 402 that is more cuboid-shaped than the debarker knives 200, 300 as shown in Figures 2A-2D and 3A-3C, respectively.

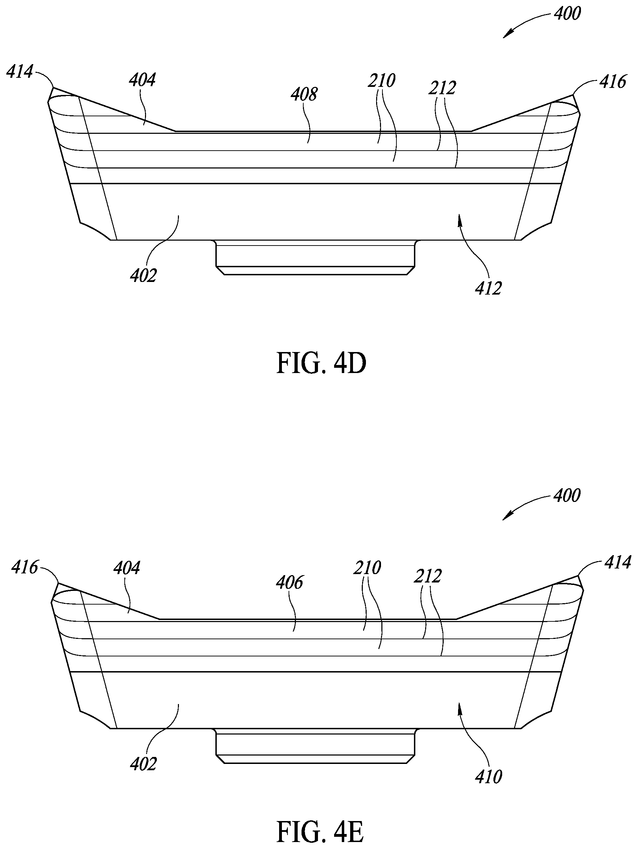

Similar to the knife tips 204 of the debarker knives 200, 300, a wear material 404 is made of an additive cutting material. Similar to the knife tips 204 of the debarker knives 200, 300 of the present disclosure, the wear material 404 includes the plurality of layers 210 and the plurality of micro-ridges 212. However, unlike the additive cutting material as shown in Figures 2A-2C and 3A and 3B, the additive cutting material as shown in Figure 4A is present at each edge of the base component 402. In other words, the additive cutting material, which forms the wear material 404, is present at each edge of the base component 402 as shown in Figure 4A. For example, the wear material 404 includes a first wraparound portion 406 that wraps around a first edge 407 (see Figure 4E) of the base component 402 and extends onto a first sidewall surface 410 (see Figure 4E) of the base component 402, and a second wraparound portion 408 wraps around a second edge 409 (see Figure 4E) of the base component 402 and extends onto a second sidewall surface 412 (see Figure 4E). The first wraparound portion 406 is opposite to the second wraparound portion 408, the first edge 407 is opposite to the second edge 409, and the first sidewall surface 410 is opposite to the second sidewall surface 412. Unlike the knife tips 204 of the debarker knives 200, 300 that both include the cutting edge 208, the wear material 404 includes a first cutting edge 414 and a second cutting edge 416 that is opposite to the first cutting edge 414.

Unlike the base components 202 of the debarker knives 200, 300 that both include a pair of the one or more openings 215, the debarker knife tip 400 includes only one of the one or more openings 215. However, in some alternative embodiments, the base component 402 of the debarker knife tip 400 may include a pair of the one or more openings 215 more similar to the base components 202 of the debarker knives 200, 300 as shown in Figures 2A-2D and 3A-3C, respectively. The base component 402 includes a plurality of grooves 418 that is similar to the plurality of grooves 302 in that the plurality of grooves 418 may allow harder and brittle wear material 404 to be utilized in the same or similar fashion as discussed earlier herein with respect to the plurality of grooves 302. However, unlike the plurality of grooves 302 that includes the first portion 304 *(e.g.,* the first half-cylinder) and the second portion 306 *(e.g.,* the second half-cylinder), the plurality of grooves 418 only includes a half-cylinder and the grooves 418 do not include a pair of differently sized half-cylinders stacked on each other like the plurality of grooves 302, as shown in Figures 3A-3C.

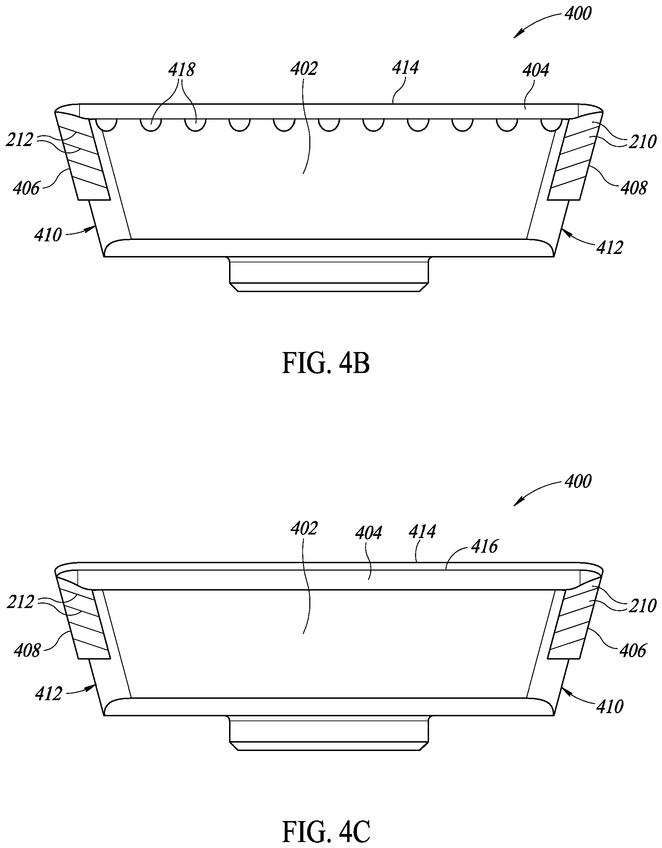

Figure 4B is a front side view of the debarker knife tip 400 as shown in Figure 4A. Figure 4C is a rear side view of the debarker knife tip 400 as shown in Figure 4A. While the plurality of grooves 418 is present at near the first cutting edge 414, in this embodiment of the debarker knife tip 400, no plurality of grooves similar to the plurality of grooves 418 is present at the rear side of the base component 402 of the debarker knife tip 400 and is not near the second cutting edge 416. In some alternative embodiments, a plurality of respective grooves similar to the plurality of grooves 418 may be present at the rear side of the base component 402, and the plurality of respective grooves increases the surface area of adhesion of the additive cutting material of the wear material 404 near the second cutting edge 416 to more securely and robustly adhere the additive cutting material of the wear material 404 to the base component 402 near the second cutting edge 416, respectively.

Figure 4D is a right side view of the debarker knife tip 400 as shown in Figure 4A. As shown in Figure 4E, the second wraparound portion 408 extends from the first cutting edge 414 to the second cutting edge 416.

Figure 4E is a left side view of the debarker knife tip 400 as shown in Figure 4A. As shown in Figure 4D, the first wraparound portion 406 extends from the first cutting edge 414 to the second cutting edge 416, and the first wraparound portion 406 is at an opposite side of the base component 402 relative to the second wraparound portion 408.

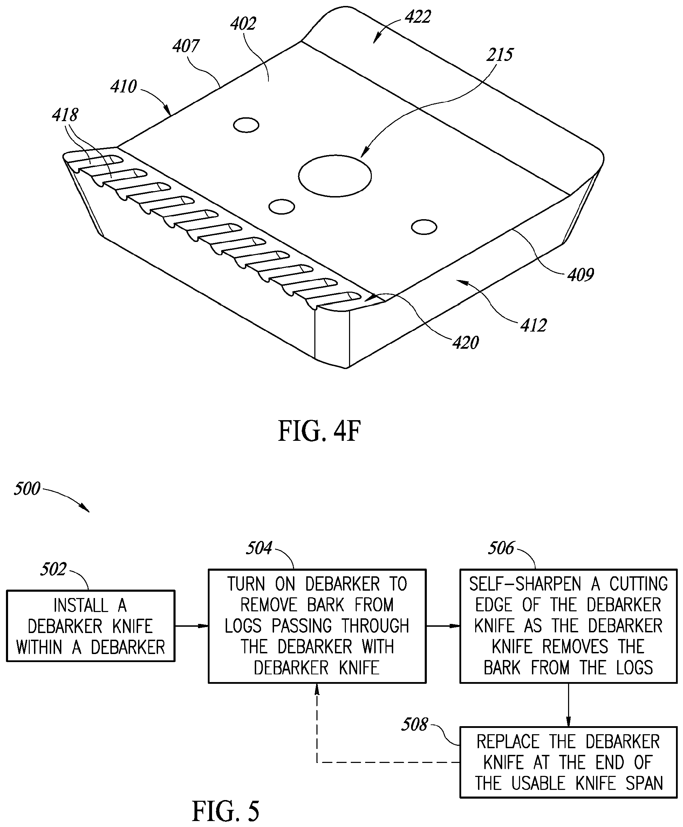

Figure 4F is a perspective view of the base component 402 without the wear material 404 present on the base component 402. As shown in Figure 4F, the base component 402 includes a first surface 420 and a second surface 422 at an opposite side of the base component 402 relative to the first surface 420. The plurality of grooves 418 extends into the first surface 420. While not present in the embodiment of the base component 402 of the debarker knife tip 400 as shown in Figure 4F, in some alternative embodiments, the base component 402 includes the plurality of respective grooves that extends into the second surface 422 and is the same or similar to the plurality of grooves 418 otherwise.

Figure 5 is a flowchart 500 of a method for utilizing the embodiments of the debarker knives 200, 300, 400 as well as other embodiments of the debarker knives within the scope of the present disclosure. While the following discussion of the method in the flowchart may readily apply to any of the debarker knives 200, 300, 400 of the present disclosure or debarker knives within the scope of the present disclosure, for the sake of simplicity and brevity of the present disclosure, the following discussion will focus on the method in the flowchart 500 when the debarker knife tip 200 is being utilized to remove bark from logs passing through a debarker.

In a first step 502 of the flowchart 500, the debarker knife tip 200 is installed into a debarker. However, this first step 502 may not be necessary if the debarker knife tip 200 is already installed within the debarker.

After the first step 502 of the flowchart 500 in which the debarker knife tip 200 is installed in the debarker, in a second step 504 the debarker is turned on such that logs are then inserted into the debarker and then passed through the debarker. As the logs pass through the debarker, the debarker knife tip 200 installed within the debarker removes the bark from the log to expose wood of the tree that is suitable to be processed into timber and/or lumber. For example, the debarker knife tip 200 may be installed at an end of one arm of a debarker ring that rotates quickly around the log such that the debarker knife tip 200 comes into contact with the bark of the log and removes the bark from the log by cutting or scraping away the bark from the log as the log passes through the rotating debarker ring. In another example, the debarker knife tip 200 may be installed within a batch debarking system.

During the second step 504 in which the log is passing through the debarker ring or a batch debarking system and the debarker knife tip 200 is removing the bark from the log, in a third step 506 the cutting edge 208 of the wear material 204 of the debarker knife tip 200 is being deteriorated and eroded as cutting edge 208 of the wear material 204 of the debarker knife tip 200 removes more and more bark from respective logs that pass through the debarker and through the rotating debarker ring. Although in the third step 506, which is being carried out in tandem with the second step 504, the cutting edge of the wear material 204 is being deteriorated and eroded, the wear material 204 is being self-sharpened as the wear material 204 is deteriorated and eroded as when a portion of the wear material 204 breaks away or shears away at the cutting edge 208 exposing a new cutting edge that is sharper than the previously-present cutting edge 208 resulting in the wear material 204 continuing to remove bark from the respective logs that pass through the debarker for a longer period of time increasing the usable lifespan of the wear material 204 of the debarker knife tip 200. As discussed earlier, this may be referred to as the self-sharpening effect, and this self-sharpening effect is a result of the plurality of micro-ridges 212 between the plurality of layers 210 as discussed earlier herein.

After the second step 504 and the third step 506, in a fourth step 508 the debarker is turned off and the debarker knife tip 200 is replaced with a new debarker knife tip 200 if it is determined that the debarker knife tip 200 is no longer capable of removing bark sufficiently from respective logs that are passed through the debarker due to the debarker knife tip 200 deteriorating to a point where the debarker knife tip 200 can no longer be self-sharpened when in use. In other words, once the wear material 204 has deteriorated past a certain point, the wear material 204 may no longer be capable of being self-sharpened enough such that the debarker knife tip 200 may readily remove bark from respective logs that pass through the debarker. In view of the above discussion, the usable lifespan of the debarker knife tip 200 with the wear material 204 including the plurality of layers 210 and the plurality of micro-ridges 212 that are formed by an additive manufacturing technique (e.g., 3D printing technique) is greater than the usable lifespan of the debarker knife tip 100 that includes the knife tip 104 of the single, continuous piece of material that is adhered as a single piece to the base component 102 of the debarker knife tip 100. The self-sharpening effect of the wear material 204 may reduce downtime of the debarker as the wear material 204 may be sharpened less often resulting in the debarker having to be shut down fewer times over the usable life span of the wear material 204, respectively.

After the debarker knife tip 200 has been replaced with the new debarker knife tip 200, the debarker is turned back on as represented by the dotted arrow as shown in Figure 5. In other words, the step 504 is carried out with respect to the new debarker knife tip 200. The steps 504, 506, 508 repeated over and over again as old debarker knife tips 200 are replaced with new debarker knife tips 200, respectively.

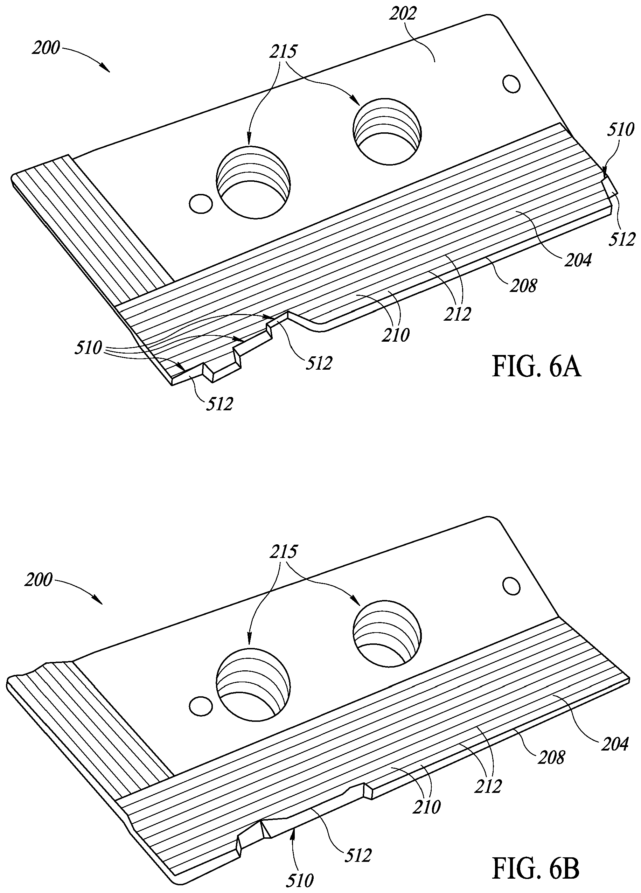

Figure 6A is a top plan view of the debarker knife 200 after being utilized for a period of time within a debarker to remove bark from respective logs that pass through the debarker. As shown in Figure 6A, the debarker knife tip 200 includes the cutting edge 208 that is mostly intact after being used for the period of time. However, at locations 510 respective portions of the wear material 204 at, near, or adjacent to the cutting edge 208 have broken away (e.g., sheared away, flaked away, eroded away, etc.) during use of the debarker knife tip 200 to remove bark from respective logs passing through the debarker. Although portions of the cutting edge 208 have broken, eroded, worn, or deteriorated away at the locations 510, new relatively straight and sharp cutting edges 512 have been formed by the breaking away, eroding away, wearing away, or deteriorating away of these portions of the wear material 204 at the locations 510, respectively. For example, unlike the catastrophic failure due to the shearing or breaking away of large portions of the knife tip 104 as shown in Figure 1B, over time smaller portions of the wear material 204 of the debarker knife tip 200 are broken away in a predictable fashion resulting in the self-sharpening effect as discussed within the present disclosure. While a catastrophic event to the wear material 204 may occur, the likelihood of the catastrophic event with respect to the wear material 204 of the debarker knife tip 200 is less than the likelihood of the catastrophic event in the knife tip 104 of the debarker knife tip 100. Unlike the knife tip 104 of the debarker knife tip 100 that is not self-sharpening in use, the wear material 204 of the debarker knife tip 200 is self-sharpening in a controlled and predictable fashion.

Figure 6B is a top plan view of the debarker knife tip 200 after being utilized for a period of time within a debarker to remove bark from respective logs that pass through the debarker. As shown in Figure 6B, the debarker knife tip 200 includes the cutting edge 208 that is mostly intact after being used for the period of time. However, the location 510 at which a respective portion of the wear material 204 at, near, or adjacent to the cutting edge 208 has broken away (e.g., sheared away, flaked away, etc.) during use of the debarker knife tip 200 to remove bark from respective logs passing through the debarker. Although the respective portion of the cutting edge 208 has broken away at the location 510, a new relatively straight and sharp cutting edge 512 has been formed by the breaking, shearing, eroding, wearing, or deteriorating away of the respective portion of the wear material 204 at the location 510, respectively. For example, unlike the catastrophic failure due to the shearing or breaking away of large portions of the knife tip 104 as shown in Figure 1B, over time smaller portions of the wear material 204 of the debarker knife tip 200 are broken away in a predictable fashion resulting in the self-sharpening effect as discussed within the present disclosure. While a catastrophic event to the wear material 204 may occur, the likelihood of the catastrophic event with respect to the wear material 204 of the debarker knife tip 200 is less than the likelihood of the catastrophic event in the knife tip 104 of the debarker knife tip 100. Unlike the knife tip 104 of the debarker knife tip 100 that is not self-sharpening in use, the wear material 204 of the debarker knife tip 200 is self-sharpening in a controlled and predictable fashion.

Figure 6C is a top plan view of the debarker knife tip 200 after being utilized for a period of time within a debarker to remove bark from respective logs that pass through the debarker. As shown in Figure 6C, the debarker knife tip 200 no longer has the cutting edge 208 after being used for the period of time. However, the location 510 at which a respective portion of the wear material 204 at, near, or adjacent to the cutting edge 208 has broken away (e.g., sheared away, flaked away, etc.) during use of the debarker knife tip 200 to remove bark from respective logs passing through the debarker. Although the cutting edge 208 has completely or entirely broken away at the location 510, a new relatively straight and sharp cutting edge 512 has been formed completely and entirely to replace the cutting edge 208 due to the breaking, shearing, deteriorating, wearing, or deteriorating away of the respective portion of the wear material 204 at the location 510, respectively. While the new relatively straight and sharp cutting edge 512 may include some jagged-ness, the new relatively straight and sharp cutting edge 512 is straight enough and sharp enough to continue to be utilized to remove bark from one or more logs passing through a debarker. For example, unlike the catastrophic failure due to the shearing or breaking away of large portions of the knife tip 104 as shown in Figure 1B, over time small portions of the wear material 204 of the debarker knife tip 200 are broken or chipped away in a predictable fashion resulting in the self-sharpening effect as discussed within the present disclosure. In other words, in the embodiment as shown in Figure 6C, the cutting edge 208 has been completely replaced with an entirely new relatively straight and sharp cutting edge 512. While a catastrophic event to the wear material 204 may occur, the likelihood of the catastrophic event with respect to the wear material 204 of the debarker knife tip 200 is less than the likelihood of the catastrophic event in the knife tip 104 of the debarker knife tip 100. Unlike the knife tip 104 of the debarker knife tip 100 that is not self-sharpening in use, the wear material 204 of the debarker knife tip 200 is self-sharpening in a controlled and predictable fashion.

Figure 7 is a top plan view of an embodiment of a debarker knife tip 514 of the present disclosure. As shown in Figure 7, the debarker knife tip 514 includes several of the same or similar features of the debarker knife tip 514 as shown in Figures 2A-2D of the present disclosure. Accordingly, the features of the debarker knife tip 514 as shown in Figure 7 have the same or similar reference numerals as those same or similar features of the debarker knife tip 200 as shown in Figures 2A-2D. For the sake of simplicity and brevity of the present disclosure, the focus of the following discussion will be on different or additional features of the debarker knife tip 514 as shown in Figure 7 relative to the debarker knife tip 200 as shown in Figures 2A-2D, and will be discussed in detail as follows within the present disclosure.

The debarker knife tip 514 includes the plurality of layers 210 and the plurality of micro-ridges 212. However, unlike the embodiment of the debarker knife tip 200 as shown in Figure 2A-2D, the plurality of layers 210 and the plurality of micro-ridges 212 that extend from the cutting edge 208 of the wear material 204 are transverse to the cutting edge 208. Similar to the debarker knife tip 200 as shown in Figure 6B, the debarker knife tip 514 includes the cutting edge 208 that is mostly intact after being used for the period of time. However, the location 510 at which a respective portion of the wear material 204 at, near, or adjacent to the cutting edge 208 has broken away (e.g., sheared away, flaked away, etc.) during use of the debarker knife 514 to remove bark from respective logs passing through the debarker. Although the respective portion of the cutting edge 208 has broken away at the location 510, a new relatively straight and sharp cutting edge 512 has been formed by the breaking, shearing, eroding, wearing, or deteriorating away of the respective portion of the wear material 204 at the location 510, respectively. For example, unlike the catastrophic failure due to the shearing or breaking away of large portions of the knife tip 104 as shown in Figure 1B, over time smaller portions of the wear material 204 of the debarker knife tip 514 are broken away in a predictable fashion resulting in the self-sharpening effect as discussed within the present disclosure. While a catastrophic event to the wear material 204 may occur, the likelihood of the catastrophic event with respect to the wear material 204 of the debarker knife tip 514 is less than the likelihood of the catastrophic event in the knife tip 104 of the debarker knife tip 100. Unlike the knife tip 104 of the debarker knife tip 100 that is not self-sharpening in use, the wear material 204 of the debarker knife tip 514 is self-sharpening in a controlled and predictable fashion.

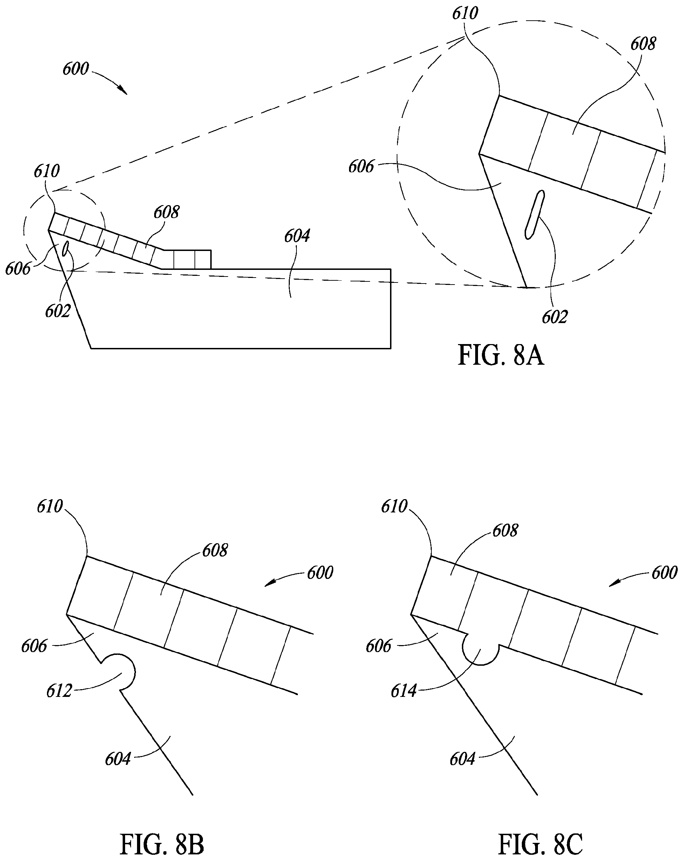

Figure 8A is directed to an alternative embodiment of a debarker knife tip 600 that includes a cavity 602 in a base component 604. The cavity 602 is at a front end 606 of the base component 604. The front end 606 of the base component may be referred to as a tip of the base component 604. A wear material 608 on the base component 604 overlaps the cavity 602 and the front end 606 of the base component 604. The wear material 608 includes a cutting edge 610 that is on the front end 606 of the base component 604. The cavity 602 is present to facilitate breaking, shearing, eroding, wearing, or deteriorating away of the front end 606 after the front end 606 of the base component 604 is in use after the front end 606 of the base component 604 has eroded away enough such that the rest of the front end 606 breaks away from the base component 604, which causes a portion of the wear material 608 including the cutting edge 610 to break away as well, exposing a new cutting edge of the wear material 608. For example, when the debarker knife tip 600 is installed in a debarker, the front end 606 deteriorates and erodes over time as the base component 604 may be made of a material softer than the wear material 608. As the front end 606 of the base component 604 deteriorates and erodes over time as the debarker knife tip 600 is utilized to remove bark from respective logs passing through the debarker, the front end 606 of the base component 604 becomes smaller and smaller over time until the rest of the front end 606 of the base component 604 breaks away (e.g., shears away, flakes away, snaps away, etc.), which causes the portion of the wear material 608 that includes the cutting edge 610 previously overlapping the front end 606 to break away (e.g., shear away, flake away, snap away, etc.) as well. The breaking, shearing, eroding, wearing, or deteriorating away of the portion of the wear material 608 with the cutting edge 610 results in the formation or exposure of a new, sharpened cutting edge sufficiently sharp to remove bark from respective logs passing through the debarker. This self-sharpening effect that is further facilitated and controlled in a predictable fashion by providing the cavity 602 at the front end 606 of the base component 604 may be utilized either alone or in combination with the plurality of layers 210 and the plurality of micro-ridges 212 when the wear material 608 is made of the additive cutting material to further facilitate and control the self-sharpening effect in a predictable fashion. Facilitating and controlling the self-sharpening effect through the presence of the cavity 602 may further increase the usable lifespan of the wear material 608 of the debarker knife tip 600.

The cavity 602 may be present within similar locations of the respective base components 202, 402 of the other embodiments of the debarker knives 200, 300, 400, 514 of the present disclosure, or in some other embodiments of debarker knives within the scope of the present disclosure. As discussed above, the cavity 602 may be present to facilitate breaking away (e.g., shearing away, flaking away, eroding away, wearing away, deteriorating away, etc.) of a respective end of the respective base component 202, 402 and increasing the likelihood the portion of the respective wear material 204, 404 overlapping the respective end of the respective base component 202, 402 breaks away removing the cutting edge 208, 414, 416 and exposing a new, sharpened cutting edge when the respective debarker knife tip 200, 300, 400, 514 is in use such that the self-sharpening effect occurs when the respective debarker knife tip 200, 300, 400, 514 is in use.

It will be readily appreciated that the cavity 602 may be present in the various embodiments of the debarker knives 200, 300, 400, 514, 600 of the present disclosure to assist in further causing the sharpening effect as discussed within the present disclosure in a predictable fashion. This may assist in further increasing the usable lifespan of the various embodiments of the debarker knives 200, 300, 400, 514, 600, respectively, for example, in the third step 506 of the method in the flowchart 500 of the present disclosure.

In various embodiments of the debarker knives 200, 300, 400, 514, 600, there may be a plurality of cavities similar to the cavity 602 spaced apart by incremental amounts from a respective end of the respective base component 202, 402, 604 to further facilitate and control the self-sharpening effect in a predictable fashion to improve the usable lifespan of the debarker knives 200, 300, 400, 514, 600 of the present disclosure. For example, providing the plurality of cavities may further improve the predictability of the self-sharpening effect resulting in the usable lifespan of the debarker knives 200, 300, 400, 514, 600 being increased relative to the debarker knife tip 100.

Figure 8B is a zoomed in, side view of an alternative embodiment of the debarker knife tip 600 as shown in Figure 8A. Unlike the debarker knife 600 as shown in Figure 8A, the debarker knife tip 600 as shown in Figure 8B includes a recess 612 at an external surface of the base component 604. The recess 612 extends into the base component 604 and terminates within the base component 604 before reaching an external surface of the base component 604 on which the wear material 608 is present. The recess 612 is adjacent to the front end 606 of the base component 604 and is devoid or empty. Similar to the cavity 602 that is provided as shown in Figure 6A to further facilitate and control in a predictable fashion the self-sharpening effect, the recess 612 is provided as an alternative to the cavity 602 to further facilitate and control in a predictable fashion the self-sharpening effect in the same or similar fashion as the cavity 602 as discussed earlier herein.

Figure 8C is a zoomed in, side view of an alternative embodiment of the debarker knife tip 600 as shown in Figure 8B. Unlike the debarker knife tip 600 as shown in Figure 8B, the debarker knife tip 600 as shown in Figure 8C includes a recess 614, however, the recess 614 is at the external surface of the base component 604 on which the wear material 608 is present. The recess 614 is filled by the wear material 608 as shown in Figure 8C instead of being devoid or empty as the recess 612 as shown in Figure 8B. Similar to the cavity 602 and the recess 612 that is provided as shown in Figure 6A to further facilitate and control in a predictable fashion the self-sharpening effect, the recess 614 is provided as an alternative to the cavity 602 and the recess 612 to further facilitate and control in a predictable fashion the self-sharpening effect in the same or similar fashion as the cavity 602 and the recess 612 as discussed earlier herein.

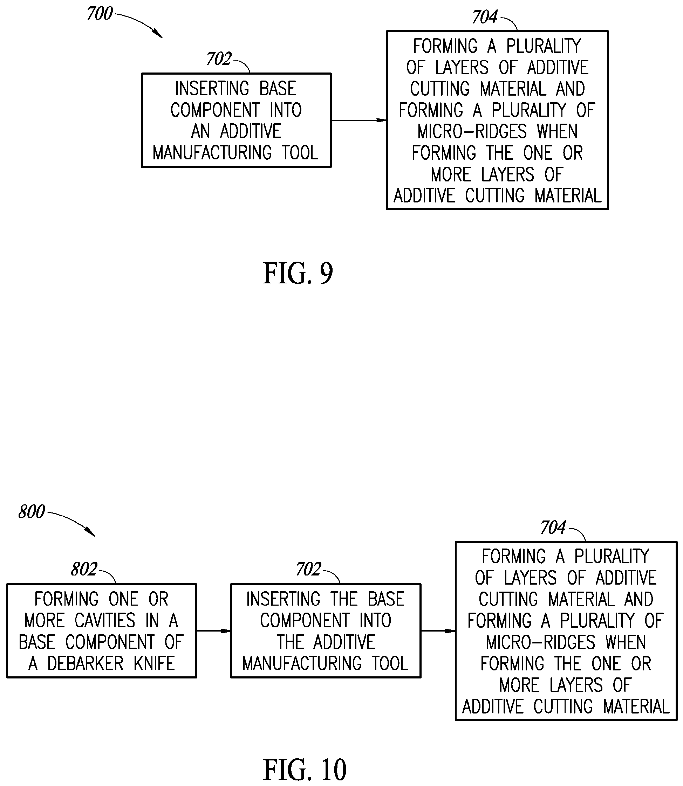

Figure 9 is a flowchart 700 of a method of manufacturing the debarker knife tips 200, 300, 400, 514 of the present disclosure. For the sake of simplicity and brevity of the present disclosure, the method of manufacturing in the flowchart 700 will be discussed in detail with respect to forming the debarker knife tip 200 as shown in Figures 2A-2D. However, it will be readily appreciated that the following discussion may readily apply to utilizing the method of manufacturing in the flowchart 700 to form the other embodiments of the debarker knives 300, 400 of the present disclosure as well as other embodiments of debarker knives within the scope of the present disclosure.

**In a** first step 702 of the method in the flowchart 700, the base component 202 is positioned or placed within an additive manufacturing tool. This additive manufacturing tool may be a direct energy deposition device, which may be a type of 3D printer. The direct energy deposition device may be structured and configured to form or print the one or more layers 210 of the additive cutting material onto the base component to form the knife tip. For example, the additive cutting material may be in the form of a powdered material that is discharged from a nozzle. Upon discharge of the powdered additive cutting material from the nozzle, a laser is focused on the powdered material and applies energy to the powdered material such that the powdered material is melted into a semi-liquid or liquid state and is deposited onto the base component 202 to form the wear material 204. For example, when the powdered material is melted into a semi-liquid or liquid state, a bead of the melted material may be formed that is then deposited onto the base component 202 to form the wear material 204. These beads of the melted material may be dropped in quick succession on the base component 202 to form the wear material 204 including the respective layers 210 and the micro-ridges 212. In other words, a stream of the beads are formed and deposited onto the base component 202 to form the wear material 204 by exposing the powdered additive cutting material discharged from the nozzle to the laser. As the stream of beads are formed, the nozzle is moved over and along the base component 202 to form the wear material 204.

In some embodiments, there may be a first powdered additive cutting material and a second powdered additive cutting material that are different from each other that are discharged in succession from the nozzle. For example, the first powered additive cutting material may be discharged initially through the nozzle and exposed to the laser to form a first bead of melted material from the first powdered additive cutting material at which point the first bead is deposited onto the base component 202. Shortly after the first bead is formed from the first powdered additive cutting material, the second powdered additive cutting material is discharged through the nozzle and exposed to the laser to form a second bead of melted material from the second powdered additive material at which point the second bead is deposited onto the base component 202. A third bead of the first powdered additive cutting material may then be formed, which is followed by forming a fourth bead of the second powdered additive cutting material, and so on. In other words, a stream of beads of melted material include staggering ones of the respective beads formed from the first powdered additive cutting material and ones of the respective beads formed from the second powdered additive cutting material. For example, this staggering may result in a pattern of the first bead of the first powdered additive cutting material being deposited onto the base component 202, followed by the second bead of the second powdered additive cutting material deposited onto the base component 202, followed by the third bead of the first powdered additive cutting material being deposited onto the base component 202, followed by the fourth bead of the second powdered additive cutting material being deposited onto the base component 202, and so on until the wear material 204 is formed. In other words, forming the wear material 204 with the staggered beads of the first and second additive cutting materials that are deposited in succession onto the base component 202 may further facilitate the self-sharpening effect of the wear material 204 occurring in a predictable and controlled manner, which may be further facilitated or controlled based on the selection of the first and second powdered additive cutting materials. In some alternative embodiments, a greater number than two different powdered additive cutting materials may be utilized, for example, there may be three different powdered additive cutting materials utilized, there may be four different powdered additive cutting materials utilized, or some other number of different types of powdered additive cutting materials may be utilized.

In some alternative embodiments, the direct energy deposition device may include a first nozzle and a second nozzle. For example, the first nozzle may initially discharge the first powdered additive cutting material and the second nozzle may then shortly thereafter discharge the second powdered additive cutting material. This process may be repeated over and over again to result in the staggering of beads of the first and second powdered additive cutting materials as discussed earlier herein.

In some alternative embodiments, the additive manufacturing tool may be of a different type than the direct energy deposition device such that the additive cutting material may be deposited in some other fashion onto the base component 202 to form a plurality of layers of the wear material 204.

After the first step 702 in which the base component 202 is positioned or placed within the additive manufacturing tool *(e.g.,* the direct energy deposition device), in a second step 704 the additive manufacturing tool *(e.g.,* direct energy deposition device) is active such that the nozzle discharges the powdered additive curing material and the laser melts the powdered additive cutting material to a semi-liquid or liquid state, which is deposited onto the base component 202. The nozzle of the additive manufacturing tool moves along the base component 202 to form the plurality of layers 210 of the additive cutting material on the base component 202 while at the same time to form the plurality of micro-ridges 212 between ones of the plurality of layers 210. For example, as the nozzle moves along the base component 202 to deposit the semi-liquid or liquid state additive cutting material on the base component 202, each one of the plurality of layers 210 is formed with a width W (see Figure 2A) that may correspond to or may be proportional to a diameter of the nozzle through which the powdered additive cutting material is discharged through the nozzle to be melted shortly thereafter to the semi-liquid or liquid state by the laser. For example, as the diameter of the nozzle increases, the width W between adjacent ones of the plurality of the micro-ridges 212 and the plurality of layers 210 increases, and, oppositely, as the diameter of the nozzle decreases, the width W between adjacent ones of the plurality of the micro-ridges 212 and the plurality of layers 210 decreases. The width W may be 1-millimeter (mm), 2-mm, 3-mm, or may have some other dimensionality.

The thickness of the plurality of layers 210 may be depend on how the direct energy deposition device is controlled to form the plurality of layers 210. For example, the thickness of the plurality of layers 210 may be controlled depending on a power of the laser applied to the powdered additive cutting material, a flow rate of the powdered additive cutting material from the nozzle, a feed speed of the powdered additive cutting material from the nozzle, a movement speed of the nozzle, or some other suitable parameter of the direct energy deposition device that may be controlled to form the plurality of layers 210.

A path along which the nozzle of the direct energy deposition device is programed to follow may form the plurality of layers 210 and the plurality of micro-ridges 212 as shown in Figures 2A-2C in which the plurality of micro-ridges 212 along the first surface 214a and the second surface 214b are substantially parallel with the cutting edge 208 of the wear material 204. In some alternative embodiments, a path along which the nozzle of the direct energy deposition device is programmed to follow may form the plurality of layers 210 and the plurality of micro-ridges 212 differently than as shown in Figures 2A-2C, such that the plurality of layers 210 and the plurality of micro-ridges 212 are transverse to the cutting edge 208 of the wear material 204. In other words, the plurality of layers 210 and the plurality of micro-ridges 212 may be at any number of various angles relative to the cutting edge 208. For example, the plurality of layers 210 and the plurality of micro-ridges 212 may be at an 30-degree angle, a 40-degree angle, a 60-degree angle, a 90-degree angle (e.g., perpendicular or orthogonal), or at any other transverse angle relative to the cutting edge 208, respectively.

While the plurality of layers 210 may become a single, continuous material of the additive curing material, each one of the plurality of layers 210 is defined by the plurality of micro-ridges 212. For example, each one of the plurality of layers 210 is defined and distinguished from an adjacent one of the plurality of layers 210 by one of the plurality of micro-ridges 212.

The method of manufacturing of the flowchart 700 as shown in Figure 7 provides geometrical freedom to form the embodiments of the debarker knives 200, 300, 400, 514, 600 of the present disclosure. For example, by forming the plurality of layers 210 with an additive manufacturing tool *(e.g.,* a direct energy deposition device) then the plurality of layers 210 may be formed having any direction or width as preferred to forming the knife tips 204, 404 of the present disclosure. This geometrical freedom of manufacturing the knife tips 204, 404 may allow ones of the plurality of layers 210 to be formed in the pluralities of grooves 302, 418, respectively.

This geometrical freedom of the knife tips 204, 404 may allow for differently-sized and differently-shaped knife tips. For example, while the knife tips 204, 404 of the present disclosure are shown as having a L-shape or a square or rectangular profile, the base components 202, 402 of the present disclosure may be rounded, curved, or circular such that the knife tips 204, 404 may be rounded, curved, or circular such that the cutting edges 208, 414, 416, respectively, may be rounded, curved, or circular as well. In other words, this geometrical freedom allows for various embodiments of debarker knives within the scope of the present disclosure that may have a size and shape different than the embodiments of the debarker knives 200, 300, 400, 514, 600 of the present disclosure.

Figure 10 is a flowchart 800 of a method of manufacturing the debarker knife tips 600 as shown in Figures 8A-8C of the present disclosure. Unlike the method of manufacturing in the flowchart 700 as shown in Figure 9, the method of manufacturing in the flowchart 800 includes forming the cavity 602 in the base component 604 at or near the front end 606 of the base component 604. The cavity 602 may be formed during a mold formation technique when forming the base component 604 out of a metal material such as a stainless steel material, an alloy material, or some other suitable type of metal material that may be utilized to form the base component 604. The base components 202, 402 may be made of a metal material such as a stainless steel material, an alloy material, or some other suitable type of metal material that may be utilized to form the base components 202, 402. In some alternative embodiments, the base components 202, 402 may be made of a composite material, a ceramic material, or some other suitable material that may be utilized for forming alternative versions of the base components 202, 402, respectively. Alternatively, the cavity 602 may be formed with a drilling technique or some other type of manufacturing technique that may be utilized to form the cavity 602 at or near the front end 606 of the base component 604 of the debarker knife tip 600. After the first step 802 in which the cavity 602 is formed in the base component 604, the respective steps 702, 704 of the method of manufacturing of the flowchart 700 are carried out successively to form the wear material 608 of the debarker knife tips 600 as shown in Figures 8A-8C. In some alternative embodiments, a plurality of cavities may be formed in the base component 604 such that the plurality of cavities is spaced apart from the front end 606 by varying amounts or increments. In other words, each successive one of the plurality of cavities formed within the base component 604 may be further away from the front end 606 relative to the previous one of the plurality of cavities. The plurality of cavities may be similar in size and shape as the cavity 602 as shown in Figures 8A-8C. The method of manufacturing as described in Figure 10 may be applied to the base components 202, 402 of the debarker knives 200, 300, 400, 514 to form alternative embodiments of the debarker knives 200, 300, 400, 514 that include the cavity 602 or a plurality of cavities 602 incrementally spaced apart from respective ends of the base components 202, 402 of the respective debarker knives 200, 300, 400, 514.

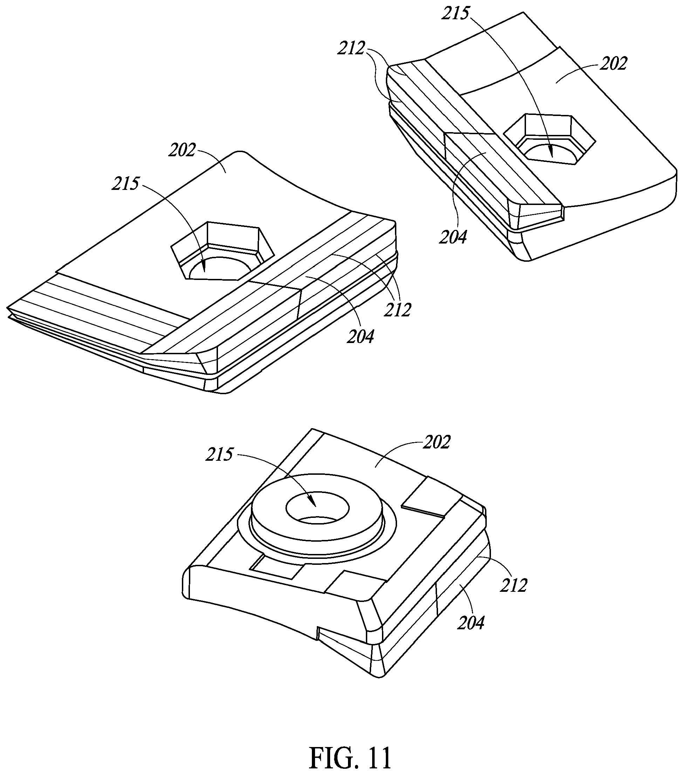

Figure 11 are perspective views of alternative embodiments of debarker knife tips of the present disclosure. The debarker knife tip at the upper-left hand side and the debarker knife tip at the upper-right hand side Figure 11 are the same or similar to the debarker knife tip 200 as discussed herein. However, unlike the debarker knife tip 200, these alternative embodiments of the debarker knife tips may have slightly different structural shape than the debarker knife tip 200, and, as may be readily seen in Figure 11, only include one opening 215. The openings 215 as shown in Figure 11 include a hexagonal portion that may receive a head or a nut for fastening the debarker knife tips within a debarker.

Figure 12 is a perspective view of an alternative embodiment of the debarker knife tip 400 as shown in Figures 4A-4E of the present disclosure. However, unlike the debarker knife tip 400 as shown in Figures 4A-4E of the present disclosure, the alternative embodiment of the debarker knife tip 400 as shown in Figure 12 does not include the plurality of grooves 418, and the debarker knife tip 400 as shown in Figure 12 includes a third cutting edge 424 and a fourth cutting edge 426 that are opposite each other. The third cutting edge 424 is a cutting edge of a respective portion of the wear material 404 that is present instead of the first wrap around portion 406, and the fourth cutting edge 426 is a cutting edge of a respective portion of the wear material 404 that is present instead of the second wrap around portion 408. The respective portions of the wear material 404 at which the third and fourth cutting edges 424, 426 are present may have the same or similar structure as respective portions of the wear material 404 that includes the first and second cutting edges 414, 416, respectively.

In some embodiments, respective grooves may be present at a respective edge of a base component 806 present below the first cutting edge 414. In some embodiments, respective grooves may be present at a respective edge of the base component 806 present below the second cutting edge 416. In some embodiments, respective grooves may be present at a respective edge of the base component 806 below the third cutting edge 424. In some embodiments, respective grooves may be present at a respective edge of the base component 806 present below the fourth cutting edge 426. In some embodiments, respective grooves may be present at all of the respective edges of the base component 806 that are present below the respective cutting edges 414, 416, 424, 426 or be present at any combination of the respective edges of the base component 806. The respective grooves may be the same or similar to the plurality of grooves 302 or the plurality of grooves 418. In some embodiments, the respective grooves may have a different size and shape than the plurality of grooves 302, 418, respectively.

In some embodiments, a respective staircase-like structure may be present at a respective edge of the base component 806 present below the first cutting edge 414. In some embodiments, a respective staircase-like structure may be present at a respective edge of the base component 806 present below the second cutting edge 416. In some embodiments, a respective staircase-like structure may be present at a respective edge of the base component 806 below the third cutting edge 424. In some embodiments, a respective staircase-like structure may be present at a respective edge of the base component 806 present below the fourth cutting edge 426. In some embodiments, each one of a plurality of respective staircase-like structures may each be present at a corresponding one of all of the respective edges of the base component 806 that are present below the respective cutting edges 414, 416, 424, 426 or be present at any combination of the respective edges of the base component 806. The respective staircase-like structure or structures may be the same or similar to the staircase-like structure 216. In some embodiments, the respective staircase-like structure or structures may have a different size and shape than the staircase-like structure 216.

In view of the above discussion, respective grooves the same or similar to the plurality of grooves 302, 418 may be positioned at any respective edges or sides of the base components 202, 402, 604, 806 in any combination (e.g., two pluralities of grooves at two opposing edges of a base component, two pluralities of grooves at two adjacent edges of a base component, three pluralities of grooves at three edges of a base component, four pluralities of grooves at four edges of a base component, etc.). In view of the above discussion, respective staircase-like structures 216 may be positioned at any respective edges of the base components 202, 402, 604, 806 *(e.g.,* two staircase-like structures at two opposing edges, two staircase-like structures at two adjacent edges, three staircase-like structures at three edges, four staircase like structures at four edges, etc.).

Figure 13 is a front side view of one or more of the debarker knife tips 200 installed within a debarker 900. As shown in Figure 13, each one of the debarker knife tips 200 may be installed on a corresponding arm of a debarker ring of the debarker 900. The debarker knife tips 200 may be installed utilizing fasteners that pass through the one or more openings 215 to fasten the debarker knife tips 200 to a corresponding one of the debarker arms of the debarker 900, respectively.

In view of the above discussion with respect to the various embodiment of the debarker knives 200, 300, 400, 514, 600 of the present disclosure, it will be readily appreciated that alternative embodiments of different sized and shaped debarker knives may be formed utilizing the methods of manufacturing as shown in the flowchart 700, 800 to have structures and features similar to those debarker knives 200, 300, 400, 514, 600 discussed in detail within the present disclosure.

In view of the above discussion, the various embodiments of the self-sharpening wear materials 204, 404, 608 debarker knives 200, 300, 400, 514, 600 of the present disclosure have an increased usable lifespan relative to the debarker knife tip 100, which includes the knife tip 104 that is adhered as a single, continuous piece that does not include a plurality of layers or a plurality of micro-ridges similar to the plurality of layers 210 and the plurality of micro-ridges 212 as shown in the various embodiments of the debarker knives 200, 300, 400, 514, 600, of the present disclosure. Due to the increased usable lifespan due to the self-sharpening nature of the debarker knives 200, 300, 400, 514, 600 of the present disclosure, replacement costs and maintenance costs of debarkers will be reduced as the debarker knives 200, 300, 400, 514, 600 need to be replaced with less frequency reducing the number of replacement debarker knives 200, 300, 400, 514, 600 that need to be purchased on a regular basis.

An embodiment of a debarker knife tip of the present disclosure may be summarized as including: a base component; and a layer of additive cutting material, including a carbide material, on the base component, the layer of additive cutting material including: a self-sharpening cutting edge that is spaced apart from the base component.

The layer of additive cutting material may be one of a plurality of layers of additive cutting material that are stacked on each other and on the base component.

The layer of additive cutting material may be a single layer of additive cutting material present on the base component.

At least a first one of the plurality of layers may be made of a first material and at least a second one of the plurality of layers may be made of a second material, the first material being different from the second material.

The base component may include one or more grooves; and the layer of additive cutting material may be within the one or more grooves.

The base component may include a stair-step structure; and the additive cutting material may be on the stair-step structure of the base component.

The base component may include one or more openings that extend into the base component.

The one or more openings may be threaded openings.

The base component may include one or more cavities within the base component overlapped by the layer of additive cutting material.

The one or more cavities may be spaced apart from an edge of the base component at which the layer of additive cutting material is present.

An embodiment of a method of the present disclosure may be summarized as including: removing bark from one or more logs by passing the one or more logs through a debarker and removing the bark from the one or more logs with a debarker knife including a knife tip made of an additive cutting material; and breaking, eroding, or wearing away a portion of the additive cutting material of a first cutting edge of the knife tip, thereby forming a second cutting edge of the additive cutting material of the knife tip.

The method may further include, after breaking, eroding, or wearing away the portion of the additive cutting material of the first cutting edge to form the second cutting edge, continuing to remove bark from the one or more logs passing through the debarker with the knife tip including the first cutting edge and the second cutting edge.

The method may further include breaking, eroding, or wearing away a portion of a base component of the debarker knife to break away the portion of the additive cutting material at the first cutting edge to expose the second cutting edge.

Breaking, eroding, or wearing away the portion of the base component may further include eroding the base component towards a break-away cavity within the base component causing the portion of the additive cutting material of the first cutting edge to break away from the knife tip.

The method may further include replacing the debarker knife at an end of a usable lifespan of the debarker knife.

An embodiment of a method of the present disclosure may be summarized as including: forming a base component of a debarker knife including forming one or more grooves at an edge of the base component; forming a knife tip of the debarker knife on the base component of the debarker knife by printing one or more layers of additive cutting material on the base component of the debarker knife.

Forming the one or more grooves at the edge of the base component may include forming a first portion and a second portion of the groove in a stacked configuration.

Printing the one or more layers of additive cutting material on the base component of the debarker knife may further include filling the one or more grooves at the edge of the base component with the one or more layers of additive cutting material.

Forming the base component may include forming one or more cavities within the base component.

Printing the one or more layers of additive cutting material on the base component of the debarker knife may further include overlapping the one or more cavities within the base component with the one or more layers of additive cutting material.

Printing the one or more layers of additive cutting material may further include printing a first layer of a first cutting material and printing a second layer of a second cutting material different from the first cutting material.

An embodiment of a debarker knife of the present disclosure may be summarized as including: a base component; and a layer of wear material, including a carbide material, on the base component, the layer of wear material including: a self-sharpening cutting edge that is spaced apart from the base component.

The layer of wear material may be one of a plurality of layers of wear material that are stacked on each other and on the base component.

At least a first one of the plurality of layers may be made of a first material and at least a second one of the plurality of layers may be made of a second material, the first material may be different from the second material.

The base component may include one or more grooves; and the layer of wear material may be within the one or more grooves.

The base component may include a stair-step structure; and the wear material may be on the stair-step structure of the base component.

The base component may include one or more openings that extend into the base component.

The wear material may be an additive wear material.

The base component may include one or more cavities within the base component that may be overlapped by the layer of wear material.

The one or more cavities may be spaced apart from an edge of the base component at which the layer of wear material may be present.

An embodiment of a method of the present disclosure may be summarized as including: removing bark from one or more logs by passing the one or more logs through a debarker and removing the bark from the one or more logs with a debarker knife including a knife tip made of a wear material; and breaking, eroding, or wearing away a portion of the wear material of a first cutting edge of the knife tip, thereby forming a second cutting edge of the wear material of the knife tip.

The method may further include, after breaking, eroding, or wearing away the portion of the wear material of the first cutting edge to form the second cutting edge, continuing to remove bark from the one or more logs passing through the debarker with the knife tip including the first cutting edge and the second cutting edge.

The method may further include breaking, eroding, or wearing away a portion of a base component of the debarker knife to break away the portion of the wear material at the first cutting edge to expose the second cutting edge.

Breaking, eroding or wearing away the portion of the base component may further include eroding the base component towards a break-away cavity within the base component causing the portion of the wear material of the first cutting edge to break away from the knife tip.

The method may further include replacing the debarker knife at an end of a usable lifespan of the debarker knife.

An embodiment of a method of the present disclosure may be summarized as including: forming a base component of a debarker knife including forming one or more grooves at an edge of the base component; and forming a knife tip of the debarker knife on the base component of the debarker knife by printing one or more layers of wear material on the base component of the debarker knife.

Forming the one or more grooves at the edge of the base component may include forming a first portion and a second portion of the groove in a stacked configuration.

Printing the one or more layers of wear material on the base component of the debarker knife may further include filling the one or more grooves at the edge of the base component with the one or more layers of wear material.

Forming the base component may include forming one or more cavities within the base component.

Printing the one or more layers of wear material on the base component of the debarker knife may further include overlapping the one or more cavities within the base component with the one or more layers of wear material.

Printing the one or more layers of wear material may further include printing a first layer of a first cutting material and printing a second layer of a second cutting material different from the first cutting material.

The various embodiments described above can be combined to provide further embodiments. Aspects of the embodiments can be modified, if necessary to employ concepts of the various patents, applications and publications to provide yet further embodiments.

These and other changes can be made to the embodiments in light of the above-detailed description. In general, in the following claims, the terms used should not be construed to limit the claims to the specific embodiments disclosed in the specification and the claims, but should be construed to include all possible embodiments along with the full scope of equivalents to which such claims are entitled. Accordingly, the claims are not limited by the disclosure.

## Claims

1. A debarker knife, (100) comprising:
a base component (102); and
a plurality of layers (210) of wear material (104) stacked on each other and on the base component, the plurality of layers of wear material including:
a carbide material; and
a self-sharpening cutting edge (108) that is spaced apart from the base component (102),
wherein at least a first one of the plurality of layers (210) is made of a first material and at least a second one of the plurality of layers (210) is made of a second material, the first material being different from the second material, and
**characterized in that**
the base component includes one or more cavities within the base component overlapped by the plurality of layers of wear material,
preferably wherein the one or more cavities are spaced apart from an edge of the base component at which the plurality of layers of wear material are present.

2. The debarker knife of claim 1, wherein:
the base component includes one or more grooves; and
the plurality of layers of wear material are within the one or more grooves.

3. The debarker knife of claim 1, wherein:
the base component includes a stair-step structure; and
the plurality of layers of wear material are on the stair-step structure of the base component.

4. The debarker knife of claim 1, wherein the base component includes one or more openings that extend into the base component, or
wherein the plurality of layers of wear material are an additive wear material.

5. A method, comprising:
removing bark from one or more logs by passing the one or more logs through a debarker and removing the bark from the one or more logs with a debarker knife (100) including a base component (102) **characterized by** having a stair-step structure and a knife tip made of a wear material on the stair-step structure of the base component; and
breaking, shearing, eroding, deteriorating, or wearing away a portion of the wear material of a first cutting edge of the knife tip, thereby forming a second cutting edge of the wear material of the knife tip.

6. The method of claim 5, further comprising, after breaking, shearing, eroding, deteriorating, or wearing away the portion of the wear material of the first cutting edge to form the second cutting edge, continuing to remove bark from the one or more logs passing through the debarker with the knife tip including the first cutting edge and the second cutting edge.

7. The method of claim 5, further comprising breaking, shearing, eroding, deteriorating, or wearing away a portion of a base component of the debarker knife to break away the portion of the wear material at the first cutting edge to expose the second cutting edge.

8. The method of claim 7, wherein breaking, shearing, eroding, deteriorating, or wearing away the portion of the base component further includes eroding the base component towards a break-away cavity within the base component causing the portion of the wear material of the first cutting edge to break away from the knife tip.

9. A method, comprising:
forming a base component (102) of a debarker knife (100)
**characterized by** including forming one or more grooves at an edge of the base component; and
forming a knife tip of the debarker knife on the base component of the debarker knife by printing one or more layers of wear material on the base component of the debarker knife.

10. The method of claim 9, wherein forming the one or more grooves at the edge of the base component includes forming a first portion and a second portion of the groove in a stacked configuration.

11. The method of claim 9, wherein printing the one or more layers of wear material on the base component of the debarker knife further includes filling the one or more grooves at the edge of the base component with the one or more layers of wear material.

12. The method of claim 9, wherein forming the base component includes forming one or more cavities within the base component.

13. The method of claim 12, wherein printing the one or more layers of wear material on the base component of the debarker knife further includes overlapping the one or more cavities within the base component with the one or more layers of wear material.

14. The method of claim 9, wherein printing the one or more layers of wear material further includes printing a first layer of a first cutting material and printing a second layer of a second cutting material different from the first cutting material.

## Patentansprüche

1. Entrindungsmesser (100), umfassend:
eine Basiskomponente (102); und
mehrere Schichten (210) aus Verschleißmaterial (104), die aufeinander und auf der Basiskomponente gestapelt sind, wobei die mehreren Schichten aus Verschleißmaterial umfassen:
ein Carbidmaterial; und
eine selbstschärfende Schneidkante (108), die von der Basiskomponente (102) beabstandet ist,
wobei mindestens eine erste der mehreren Schichten (210) aus einem ersten Material besteht und mindestens eine zweite der mehreren Schichten (210) aus einem zweiten Material besteht, wobei sich das erste Material von dem zweiten Material unterscheidet, und
**dadurch gekennzeichnet, dass** die Basiskomponente einen oder mehrere Hohlräume innerhalb der Basiskomponente aufweist, die von den mehreren Schichten aus Verschleißmaterial überlappt werden,
wobei vorzugsweise der eine oder die mehreren Hohlräume von einer Kante der Basiskomponente, an welcher die mehreren Schichten aus Verschleißmaterial vorhanden sind, beabstandet sind.

2. Entrindungsmesser nach Anspruch 1, wobei:
die Basiskomponente eine oder mehrere Nuten aufweist; und
sich die mehreren Schichten aus Verschleißmaterial innerhalb der einen oder mehreren Nuten befinden.

3. Entrindungsmesser nach Anspruch 1, wobei:
die Basiskomponente eine Treppenstufenstruktur aufweist; und
sich die mehreren Schichten aus Verschleißmaterial auf der Treppenstufenstruktur der Basiskomponente befinden.

4. Entrindungsmesser nach Anspruch 1, wobei die Basiskomponente eine oder mehrere Öffnungen aufweist, die sich in die Basiskomponente erstrecken, oder wobei die mehreren Schichten aus Verschleißmaterial ein additives Verschleißmaterial sind.

5. Verfahren, umfassend:
Entfernen von Rinde von einem oder mehreren Baumstämmen durch Durchführen des einen oder der mehreren Baumstämme durch einen Entrinder und Entfernen der Rinde von dem einen oder den mehreren Baumstämmen mit einem Entrindungsmesser (100), das eine Basiskomponente (102) aufweist, **dadurch gekennzeichnet, dass** diese eine Treppenstufenstruktur und eine Messerspitze aus einem Verschleißmaterial auf der Treppenstufenstruktur der Basiskomponente aufweist; und
Brechen, Abscheren, Erodieren, Verschlechtern oder Abnutzen eines Teils des Verschleißmaterials einer ersten Schneidkante der Messerspitze, wodurch eine zweite Schneidkante des Verschleißmaterials der Messerspitze gebildet wird.

6. Verfahren nach Anspruch 5, ferner umfassend, nach dem Brechen, Abscheren, Erodieren, Verschlechtern oder Abnutzen des Teils des Verschleißmaterials der ersten Schneidkante zur Bildung der zweiten Schneidkante, das Fortsetzen des Entfernens von Rinde von dem einen oder den mehreren Baumstämmen, die durch den Entrinder geführt werden, mit der Messerspitze, die die erste Schneidkante und die zweite Schneidkante umfasst.

7. Verfahren nach Anspruch 5, ferner umfassend das Brechen, Abscheren, Erodieren, Verschlechtern oder Abnutzen eines Teils einer Basiskomponente des Entrindungsmessers, um den Teil des Verschleißmaterials an der ersten Schneidkante abzubrechen, um die zweite Schneidkante freizulegen.

8. Verfahren nach Anspruch 7, wobei das Brechen, Abscheren, Erodieren, Verschlechtern oder Abnutzen des Teils der Basiskomponente ferner das Erodieren der Basiskomponente in Richtung eines Abbruchhohlraums innerhalb der Basiskomponente umfasst, wodurch bewirkt wird, dass der Teil des Verschleißmaterials der ersten Schneidkante von der Messerspitze abbricht.

9. Verfahren, umfassend:
Herstellen einer Basiskomponente (102) eines Entrindungsmessers (100), **dadurch gekennzeichnet, dass** dies das Herstellen einer oder mehrerer Nuten an einer Kante der Basiskomponente umfasst; und
Herstellen einer Messerspitze des Entrindungsmessers auf der Basiskomponente des Entrindungsmessers durch Drucken einer oder mehrerer Schichten aus Verschleißmaterial auf die Basiskomponente des Entrindungsmessers.

10. Verfahren nach Anspruch 9, wobei das Herstellen der einen oder mehreren Nuten an der Kante der Basiskomponente das Herstellen eines ersten Abschnitts und eines zweiten Abschnitts der Nut in einer gestapelten Konfiguration umfasst.

11. Verfahren nach Anspruch 9, wobei das Drucken der einen oder mehreren Schichten aus Verschleißmaterial auf die Basiskomponente des Entrindungsmessers ferner das Füllen der einen oder mehreren Nuten an der Kante der Basiskomponente mit der einen oder den mehreren Schichten aus Verschleißmaterial umfasst.

12. Verfahren nach Anspruch 9, wobei das Herstellen der Basiskomponente das Herstellen eines oder mehrerer Hohlräume innerhalb der Basiskomponente umfasst.

13. Verfahren nach Anspruch 12, wobei das Drucken der einen oder mehreren Schichten aus Verschleißmaterial auf die Basiskomponente des Entrindungsmessers ferner das Überlappen des einen oder der mehreren Hohlräume innerhalb der Basiskomponente mit der einen oder den mehreren Schichten aus Verschleißmaterial umfasst.

14. Verfahren nach Anspruch 9, wobei das Drucken der einen oder mehreren Schichten aus Verschleißmaterial ferner das Drucken einer ersten Schicht aus einem ersten Schneidmaterial und das Drucken einer zweiten Schicht aus einem zweiten Schneidmaterial, das sich von dem ersten Schneidmaterial unterscheidet, umfasst.

## Revendications

1. Couteau d'écorçage (100), comprenant :
un composant de base (102) ; et
une pluralité de couches (210) de matériau d'usure (104) empilées les unes sur les autres et sur le composant de base, la pluralité de couches de matériau d'usure comportant :
un matériau en carbure ; et
une arête de coupe auto-affûtante (108) qui est espacée du composant de base (102),
dans lequel au moins une première parmi la pluralité de couches (210) est réalisée en un premier matériau et au moins une seconde parmi la pluralité de couches (210) est réalisée en un second matériau, le premier matériau étant différent du second matériau, et
**caractérisé en ce que**
le composant de base comporte une ou plusieurs cavités au sein du composant de base recouvertes par la pluralité de couches de matériau d'usure,
de préférence dans lequel les une ou plusieurs cavités sont espacées d'un bord du composant de base au niveau duquel la pluralité de couches de matériau d'usure sont présentes.

2. Couteau d'écorçage selon la revendication 1, dans lequel :
le composant de base comporte une ou plusieurs rainures ; et
la pluralité de couches de matériau d'usure se trouvent au sein des une ou plusieurs rainures.

3. Couteau d'écorçage selon la revendication 1, dans lequel :
le composant de base comporte une structure en escalier ; et
la pluralité de couches de matériau d'usure se trouvent sur la structure en escalier du composant de base.

4. Couteau d'écorçage selon la revendication 1, dans lequel le composant de base comporte une ou plusieurs ouvertures qui s'étendent dans le composant de base, ou
dans lequel la pluralité de couches de matériau d'usure sont un matériau d'usure additif.

5. Procédé, comprenant :
l'élimination d'écorce d'un ou plusieurs troncs en faisant passer les un ou plusieurs troncs à travers une écorceuse et l'élimination de l'écorce des un ou plusieurs troncs avec un couteau d'écorçage (100) comportant un composant de base (102) **caractérisé en ce qu'**il présente une structure en escalier et une pointe de couteau réalisée en un matériau d'usure sur la structure en escalier du composant de base ; et
la rupture, le cisaillement, l'érosion, la détérioration ou l'usure d'une portion du matériau d'usure d'un premier bord de coupe de la pointe de couteau, formant ainsi un second bord de coupe du matériau d'usure de la pointe de couteau.

6. Procédé selon la revendication 5, comprenant en outre, après la rupture, le cisaillement, l'érosion, la détérioration ou l'usure de la portion du matériau d'usure du premier bord de coupe pour former le second bord de coupe, la poursuite de l'élimination d'écorce des un ou plusieurs troncs passant à travers l'écorceuse, la pointe de couteau comportant le premier bord de coupe et le second bord de coupe.

7. Procédé selon la revendication 5, comprenant en outre la rupture, le cisaillement, l'érosion, la détérioration ou l'usure d'une portion d'un composant de base du couteau d'écorçage pour rompre la portion du matériau d'usure au niveau du premier bord de coupe pour exposer le second bord de coupe.

8. Procédé selon la revendication 7, dans lequel la rupture, le cisaillement, l'érosion, la détérioration ou l'usure de la portion du composant de base comporte en outre l'érosion du composant de base vers une cavité de rupture au sein du composant de base amenant la rupture de la portion du matériau d'usure du premier bord de coupe par rapport à la pointe de couteau.

9. Procédé, comprenant :
la formation d'un composant de base (102) d'un couteau d'écorçage (100) **caractérisé en ce qu'**il comporte la formation d'une ou plusieurs rainures au niveau d'un bord du composant de base ; et
la formation d'une pointe de couteau du couteau d'écorçage sur le composant de base du couteau d'écorçage en imprimant une ou plusieurs couches de matériau d'usure sur le composant de base du couteau d'écorçage.

10. Procédé selon la revendication 9, dans lequel la formation des une ou plusieurs rainures au niveau du bord du composant de base comporte la formation d'une première portion et d'une seconde portion de la rainure dans une configuration empilée.

11. Procédé selon la revendication 9, dans lequel l'impression des une ou plusieurs couches de matériau d'usure sur le composant de base du couteau d'écorçage comporte en outre le remplissage des une ou plusieurs rainures au niveau du bord du composant de base avec les une ou plusieurs couches de matériau d'usure.

12. Procédé selon la revendication 9, dans lequel la formation du composant de base comporte la formation d'une ou plusieurs cavités au sein du composant de base.

13. Procédé selon la revendication 12, dans lequel l'impression des une ou plusieurs couches de matériau d'usure sur le composant de base du couteau d'écorçage comporte en outre le recouvrement des une ou plusieurs cavités au sein du composant de base par les une ou plusieurs couches de matériau d'usure.

14. Procédé selon la revendication 9, dans lequel l'impression des une ou plusieurs couches de matériau d'usure comporte en outre l'impression d'une première couche d'un premier matériau de coupe et l'impression d'une seconde couche d'un second matériau de coupe différent du premier matériau de coupe.
